(19) Europäisches Patentamt
European Patent Office
Office européen des brevets

(11) EP 2 298 713 B1

(12) **EUROPEAN PATENT SPECIFICATION**

(45) Date of publication and mention
of the grant of the patent:
**31.07.2013 Bulletin 2013/31**

(51) Int Cl.:
***C04B 35/48*** *(2006.01)*     ***A44C 5/14*** *(2006.01)*
***A44C 27/00*** *(2006.01)*

(21) Application number: **09770218.7**

(22) Date of filing: **25.06.2009**

(86) International application number:
**PCT/JP2009/061578**

(87) International publication number:
**WO 2009/157508 (30.12.2009 Gazette 2009/53)**

(54) **PINKISH TO PURPLISH CERAMIC AND DECORATIVE PART**

BLASSROSA- BIS BLASSVIOLETTFARBENE KERAMIK UND DEKORATIVES TEIL

CÉRAMIQUE ROSÉE À VIOLACÉE ET PIÈCE DÉCORATIVE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.06.2008 JP 2008167418**

(43) Date of publication of application:
**23.03.2011 Bulletin 2011/12**

(73) Proprietor: **Kyocera Corporation**
**Kyoto-shi**
**Kyoto 612-8501 (JP)**

(72) Inventor: **MIKAKI,Shunji**
**Satsumasendai-shi**
**Kagoshima 895-0292 (JP)**

(74) Representative: **HOFFMANN EITLE**
**Patent- und Rechtsanwälte**
**Arabellastrasse 4**
**81925 München (DE)**

(56) References cited:
**JP-A- 3 265 565**    **JP-A- 4 002 658**
**JP-A- 6 199 098**    **JP-A- 11 147 756**
**US-A- 4 742 030**

**Description**

Technical Field

The present invention relates to pinkish to purplish ceramics that are preferably used as a decorative component, and particularly to a decorative component for watch, such as wristwatch case or band links; a decorative component for mobile terminal, such as various keys that are operated by pushing, and case; a decorative component for fishing line guide, such as a fishing line guide ring; a decorative component for daily life articles, such as a soap case or a coffee cup set; a decorative component for vehicle supplies, such as an emblem of a manufacturer or a model name, or a corner pole; a decorative component for sports goods, such as an accessory of a golf club, or studs of spiked shoes; a decorative component for musical instrument, such as a base plate of a guitar; and a decorative component for accessory, such as a case of an earphone unit, or a bridge of eyeglasses.

Background Art

Ceramics having various color tones have recently been used as a decorative component of watch. Particularly in Europe, a decorative component using ceramics that develop a pink color is the focus of attention as color tone that symbolizes pacifism and happiness, exerts a healing effect and increases love fortune.

Patent Document 1 proposes, as ceramics that develop such pink color tone, for example, a pink zirconia sintered body containing 0.5 to 2.0 mol% of $Er_2O_3$ and 0.1 to 0.6 mol% of ZnO based on $ZrO_2$ containing a stabilizing agent. This publication describes that sintering can be conducted at a lower temperature by being allowed to contain 0.1 to 0.6 mol% of ZnO as a sintering aid, and a pink zirconia sintered body having vivid color tone and a high mechanical strength can be produced by being allowed to contain 0.5 to 2.0 mol% of $Er_2O_3$ as a coloring agent.

Patent Document 2 proposes a high-strength colored zirconia-based sintered body consisting of 72 to 94.9% by weight of $ZrO_2$ containing 1.5 to 5 mol% of $Y_2O_3$ and/or 5 to 30 mol% of $CeO_2$, 5 to 25% by weight of $Al_2O_3$, and 0.1 to 3% by weight of one kind, or two or more kinds selected from $Eu_2O_3$, $Er_2O_3$, $Ho_2O_3$, $Nd_2O_3$, $Pr_2O_3$, $Th_2O_3$, $Tm_2O_3$, CuO, $Cu_2O$ and CoO, and having a specific gravity that accounts for not less than 95% of a theoretical specific gravity calculated from the composition. This publication describes that the sintered body has both large fracture toughness and deflection strength and has a light weight, and also has decorativeness because it is colored. The publication also describes that, in Examples, sample consisting of 79.5% by weight of $ZrO_2$ ($Y_2O_3$: 3 mol%), 20% by weight of $Al_2O_3$ and 0.5% by weight of $Er_2O_3$, sample consisting of 84.5% by weight of $ZrO_2$ ($Ce_2O_3$: 10 mol%), 15% by weight of $Al_2O_3$ and 0.05% by weight of $Eu_2O_3$, and sample consisting of 77% by weight of $ZrO_2$ ($Y_2O_3$: 5 mol%), 22% by weight of $Al_2O_3$ and 1% by weight of $Ho_2O_3$ develop a pinkish color.

Prior Art Documents

Patent Documents

   Patent Document 1: JP-A-4-2658
   Patent Document 2: JP-A-1-234364

Disclosure of the Invention

Problems to be Solved by the Invention

The pinkish zirconia sintered body described in Patent Document 1 can be sintered at a low temperature, and also develops a pinkish color with vivid color tone and has a high mechanical strength. However, there was a problem that when this pink zirconia sintered body is used as a decorative component, if the sintered body is subjected to marking of characters, serial No., etc. or boring by irradiation with laser beam, the periphery of marked characters or holes undergoes brackish discoloration and is viewed in a blurred state like the case of writing characters with sumi ink on a paper, thus resulting in a loss of commercial value (hereinafter, this phenomenon is described as blur).

Also, the high-strength colored zirconia-based sintered body described in Patent Document 2 has both large fracture toughness and deflection strength and also develops a color of pink color tone. However, both sintered bodies have a high content of $Al_2O_3$ and therefore develop a pink color with whitish color tone, thus resulting in reduced healing effect. Accordingly, the sintered bodies did not necessarily develop a pink color with color tone that is favored by users. It has become apparent that taste in color of individuals widely varies, and there is a tendency that a decorative component having a color ranging from a pink color that exerts a healing effect to a purple color that makes users to feel elegance is favored.

The present invention has been made so as to solve the above problems and an object thereof is to provide pinkish to purplish ceramics that are less likely to cause blur at the periphery of the portion irradiated with laser beam even when subjected to marking or boring by irradiation with laser beam, thus making it possible to exert a healing effect on users and to make them to feel elegance through a visual sense; and a decorative component for watch, a decorative component for mobile terminal, a decorative component for fishing line guide, a decorative component for daily life articles, a decorative component for vehicle parts, a decorative component for sports goods, a decorative component for musical instrument, a decorative component for accessory and a decorative component for building materials using the same. Means for Solving the Problems

The pinkish to purplish ceramics of the present invention are pinkish to purplish ceramics comprising: zirconium oxide containing stabilizing agent as a main component; a coloring agent composed of at least one kind selected from erbium oxide, europium oxide and holmium oxide; and aluminum oxide, wherein a content of the coloring agent is not less than 3.0% by mass nor more than 15.0% by mass, and a content of the aluminum oxide is not less than 0.6% by mass nor more than 5.0% by mass, based on 100% by mass of all components constituting the pinkish to purplish ceramics.

Effects of the Invention

According to the pinkish to purplish ceramics of the present invention, since they are pinkish to purplish ceramics comprising: the zirconium oxide containing stabilizing agent as the main component; the coloring agent composed of at least one kind selected from erbium oxide, europium oxide and holmium oxide; and aluminum oxide, wherein the content of the coloring agent is not less than 3.0% by mass nor more than 15.0% by mass, and the content of the aluminum oxide is not less than 0.6% by mass nor more than 5.0% by mass, based on 100% by mass of all components constituting the pinkish to purplish ceramics, it is possible to produce pinkish to purplish color tone that makes users to feel gentleness and mild warmness, thus making it possible to exert a higher healing effect on users and to make them to feel elegance. Although the reason is not clear, when subjected to marking of characters, serial No., etc. or boring by irradiation with laser beam, since oxygen in crystal grains of aluminum oxide would be supplemented to crystal grains of zirconium oxide produced by irradiation with laser beam, blur is less likely to occur at the periphery of the portion irradiated with laser beam, thus resulting in less fear of a loss in commercial value.

Brief Description of the Drawings

Fig. 1 shows an example of a watch case that is a decorative component for watch of the present invention, Fig. 1 (a) is a perspective view of the watch case as seen from the front surface, and Fig. 1(b) is a perspective view of the watch case of Fig. 1(a) as seen from the back surface.

Fig. 2 is a perspective view showing another example of a watch case that is a decorative component for watch of the present invention.

Fig. 3 is a schematic view showing an example of the constitution of a watch band that is a decorative component for watch of the present invention.

Fig. 4 is a perspective view showing an example of a mobile phone that uses a decorative component for mobile terminal of the present invention.

Fig. 5 is a perspective view showing the mobile phone of the example shown in Fig. 4 in a state of chassis opened.

Fig. 6 is a perspective view showing an example of a note-type personal computer that is a decorative component for mobile terminal of the present invention.

Fig. 7 shows a fish line guide ring that is a decorative component for fish line guide of the present invention, and an example of the fish line guide provided with the fish line guide ring, Fig. 7(a) is a perspective view of the fish line guide ring, and Fig. 7(b) is a perspective view of a fish line guide provided with the fish line guide ring shown in Fig. 7 (a) .

Fig. 8 is a schematic view showing an example of the constitution of a soap case that is a decorative component for daily life articles of the present invention.

Fig. 9 is a perspective view showing an example of a coffee cup set that is a decorative component for daily life articles of the present invention.

Fig. 10 is a perspective view showing an example of a vehicle body having a decorative component for vehicle parts of the present invention mounted thereon.

Fig. 11 is a front view showing an example of a corner pole that uses a decorative component for vehicle parts of the present invention.

Fig. 12 is a front view showing an example of a golf club that uses a decorative component for sports goods of the present invention.

Fig. 13 is a bottom view showing an example of spiked shoes that uses a decorative component for sports goods of the present invention.

Fig. 14 is a perspective view showing an example of a guitar that uses a decorative component for musical instrument of the present invention.

Fig. 15 is a front view showing an example of an earphone unit that uses a decorative component for accessory of the present invention.

Fig. 16 is a perspective view showing an example of eyeglasses that uses a decorative component for accessory of the present invention.

Fig. 17 is a perspective view showing an example of a door handle that uses a decorative component for architectural materials of the present invention.

Mode for Carrying Out the Invention

Examples of embodiments of the pinkish to purplish ceramics of the present invention will be described below.

The pinkish to purplish ceramics of the present invention comprise: zirconium oxide ($ZrO_2$) containing stabilizing agent as a main component; a coloring agent composed of at least one kind selected from erbium oxide ($Er_2O_3$), europium oxide ($Eu_2O_3$) and holmium oxide ($Ho_2O_3$); and aluminum oxide ($Al_2O_3$). As the stabilizing agent, for example, at least one kind selected from yttrium oxide ($Y_2O_3$), cerium oxide ($CeO_2$), dysprosium oxide ($Dy_2O_3$), magnesium oxide ($MgO$), neodymium oxide ($Nd_2O_3$) and calcium oxide ($CaO$) may be used.

The main component as used herein is a component that accounts for not less than 50% by mass of 100% by mass of all components constituting the pinkish to purplish ceramics. The zirconium oxide containing stabilizing agent as the main component has a feature that mechanical properties such as strength and fracture toughness are high. Therefore, in the pinkish to purplish ceramics of the present invention, it is preferable to contain not less than 80% by mass of the zirconium oxide containing stabilizing agent. In order to produce the pinkish to purplish ceramics having further enhanced mechanical properties, it is preferable to adjust the total content of the coloring agent and aluminum oxide to not more than 10% by mass, and to contain not less than 90% by mass of the zirconium oxide containing stabilizing agent.

The pinkish to purplish ceramics of the present invention can produce pinkish to purplish color tone that makes users to feel gentleness and mild warmness, thus making it possible to exert a higher healing effect on users and to make them to feel elegance, by combining zirconium oxide and aluminum oxide developing a white color, with a coloring agent composed of at least one kind selected from erbium oxide, europium oxide and holmium oxide.

Also, color tone of the pinkish to purplish ceramics varies depending on the content of the coloring agent. There is a tendency that the pinkish to purplish ceramics develop a light pink color when the content of the coloring agent is small, whereas, the pinkish to purplish ceramics develop a deep purple color when the content of the coloring agent is large.

The content of the aluminum oxide also exerts an influence of color tone of the pinkish to purplish ceramics. When the content of the aluminum oxide is small, less influence is exerted on color tone of the pinkish to purplish ceramics. However, when the content of the aluminum oxide is large, the ceramics develop a pinkish to purplish color with whitish color tone, thus resulting in reduced healing effect and elegance. Accordingly, the ceramics cannot necessarily develop a pinkish to purplish color that is favored by users. As described above, in order to obtain the pinkish to purplish ceramics that can exert a high healing effect on users and make them to feel elegance, it is necessary to contain aluminum oxide in the amount suited for the content of the coloring agent. In case that the content of the aluminum oxide is too small, when the ceramics are subjected to marking of characters, serial No., etc. or boring by irradiation with laser beam, blur is likely to occur at the periphery of the portion irradiated with laser beam.

The reason why blur is less likely to occur at the periphery of the portion irradiated with laser beam by being allowed to contain aluminum oxide is not unclear. However, it is assumed that a cause of occurrence of blur is whether or not lattice defects are formed in crystal grains of zirconium oxide by irradiation with laser beam and oxygen in crystal grains of aluminum oxide is supplemented to the lattice defects. As described above, the content of the aluminum oxide exerts an influence on color tone of the pinkish to purplish ceramics, and on blur occurred at the periphery of the portion irradiated with laser beam when the ceramics are subjected to marking of characters, serial No., etc. or boring by irradiation with laser beam.

Therefore, it is important that the pinkish to purplish ceramics of the present invention are pinkish to purplish ceramics comprising zirconium oxide containing stabilizing agent as the main component; a coloring agent composed of at least one kind selected from erbium oxide, europium oxide and holmium oxide; and aluminum oxide, wherein the content of the coloring agent is not less than 3.0% by mass nor more than 15.0% by mass, and the content of the aluminum oxide is not less than 0.6% by mass nor more than 5.0% by mass, based on 100% by mass of all components constituting the pinkish to purplish ceramics. In the case of containing the coloring agent and aluminum oxide in the above range, blur is less likely to occur at the periphery of the portion irradiated with laser beam when subjected to marking or boring by irradiation with laser beam. Therefore, the ceramics can be preferably used as a decorative component and can produce pinkish to purplish color tone that can exert a high healing effect on users and make them to feel elegance through visual sense.

In particular, if the content of the coloring agent is not less than 3.2% by mass nor more than 13.0% by mass, in the case of allowing to contain not less than 0.6% by mass nor more than 5.0% by mass of aluminum oxide that may suppress the blur occurred at the periphery of the portion irradiated with laser beam, it is possible to develop pinkish to purplish color tone that exerts a high healing effect on users and makes them to feel elegance, and also the content of zirconium oxide as the main component increases and thus mechanical properties such as strength and fracture toughness enhance. Therefore, it is preferable that the content of the coloring agent is not less than 3.2% by mass nor more than 13.0% by mass.

In the pinkish to purplish ceramics of the present invention, it is preferable that a ratio of the content of the aluminum oxide to the content of the coloring agent is not less than 0.1 nor more than 1.0. When a ratio obtained by dividing the content of the aluminum oxide by the content of the coloring agent is not less than 0.1 nor more than 1.0, pinkish to purplish color tone with increased reddishness, that is graceful and gorgeous, is produced, thus making it possible to give high-grade impression and aesthetic satisfaction to users.

It is also preferable that the pinkish to purplish ceramics of the present invention contain zinc oxide. The zinc oxide serves as a sintering aid and the content thereof exerts an influence on relative density and hardness of the ceramics developing a pinkish to purplish color. When the content of the zinc oxide is large, the relative density of the pinkish to purplish ceramics increases since densification upon sintering is accelerated. However, the hardness tends to decrease since a grain boundary phase constituted from the zinc oxide also increases. In contrast, when the content of the zinc oxide is small, the hardness of the pinkish to purplish ceramics increases since the grain boundary phase constituted from the zinc oxide also decreases. However, the relative density tends to decrease since it becomes difficult to accelerate densification. From such the viewpoint, it is preferable that the content of the zinc oxide is not less than 0.1% by mass nor more than 1.0% by mass based on 100% by mass of all components constituting the pinkish to purplish ceramics. When the content of the zinc oxide is in the above range, the relative density becomes not less than 96% and the hardness becomes not less than 11 GPa to obtain the pinkish to purplish ceramics that are dense and also have hardness required to a decorative component.

The contents of zirconium oxide, aluminum oxide, and the respective oxides as a stabilizing agent and coloring agents can be obtained by determining the content of each element using X-ray fluorescence spectroscopy or inductively coupled plasma (ICP) atomic emission spectrometry, and converting the content to that of oxide.

It is preferable that the pinkish to purplish ceramics of the present invention have a lightness index L* in a range of not less than 72 nor more than 85, and a chromaticness indice a* in a range of not less than 7 nor more than 20 and a chromaticness indice b* in a range of not less than -6 nor more than 2 in the L*a*b* color space of CIE1976 of the decorative surface. When the lightness index and chromaticness indices are in the above range, the color tone becomes pinkish to purplish color tone that exerts an excellent synergistic effect and makes users to feel gentleness and mild warmness, thus making it possible to exert a higher healing effect on users and to make them to feel elegance.

The decorative surface in the pinkish to purplish ceramics of the present invention refers only to a surface of a decorative component which is required to have decorative value, and does not mean the entire surface since it is unnecessary to include the surface to which decorative value is not required. For example, in case that the pinkish to purplish ceramics of the present invention are used in a watch case, the outside surface of the watch case is subjected to aesthetic evaluation and is required to have decorative value, and is therefore referred to as the decorative surface, but the inner surface in which the drive mechanism of the watch is fitted is not usually required to have decorative value, and therefore it is not the decorative surface.

The lightness index L* indicates the degree of lightness or darkness of color tone, and a higher value of the lightness index L* means lighter color tone and a lower value of the lightness index L* means darker color tone. In the pinkish to purplish ceramics of the present invention, when the value of lightness index L* is in a range of not less than 72 nor more than 85, it is possible to develop pinkish to purplish color tone of satisfactory brightness.

The chromaticness indice a* indicates a proportion of red and green in the color tone. A larger positive value of chromaticness indice a* means red color tone, and a smaller absolute value of chromaticness indice a* means dull color tone with reduced vividness, while a lager negative value of chromaticness indice a* means green color tone. In the pinkish to purplish ceramics of the present invention, when the chromaticness indice a* is in a range of not less than 7 nor more than 20, it is possible to develop pinkish to purplish color tone with satisfactory vividness.

The chromaticness indice b* indicates a proportion of yellow and blue in the color tone. A larger positive value of chromaticness indice b* means yellow color tone, and a larger negative value of chromaticness indice b* means blue color tone. In the pinkish to purplish ceramics of the present invention, when the chromaticness indice b* is in a range of not less than -6 nor more than 2, it is possible to suppress yellow or blue color tone that hinders pinkish to purplish color tone that can exert a high healing effect on users and makes them to feel elegance.

The values of the lightness index L* and the chromaticness indices a* and b* in the L*a*b* color space of CIE1976 of the decorative surface of the pinkish to purplish ceramics of the present invention can be obtained by measuring in accordance with the procedure specified in JIS Z 8722-2000. For example, the measurement can be conducted by using a colorimeter (CR-221 or a new model thereof, manufactured by the former Minolta Co., Ltd.) in combination with a CIE standard light source D65 as a light source in a light receiving method set under the conditions a ((45-n)[45-0]) with the measurement diameter being set to 3 mm. When it is impossible to ensure sufficient measurement diameter, the measurement may be conducted by setting to the same conditions as described above after polishing an arbitrary position.

In the pinkish to purplish ceramics of the present invention, it is preferable that the stabilizing agent is an yttrium, cerium or dysprosium compound. When the yttrium compound is used as the stabilizing agent, mechanical properties such as strength and fracture_toughness can be improved. When the cerium or dysprosium compound is used as the stabilizing agent, it becomes possible to suppress phase transition of a zirconia crystal from a tetragonal crystal to a monoclinic crystal. For example, when exposed to a high temperature of 100°C or higher, it is possible to make it difficult to cause cracking or breakage on the surface due to expansion in volume associated with phase transition, and thus heat resistance can be improved.

Regarding the amount of each stabilizing agent, when the total amount of the stabilizing agent and zirconia is 100 mol%, it is preferred that the amount is not less than 1 mol% nor more than 3 mol% in the case of using an yttrium compound, not less than 8 mol% nor more than 12 mol% in the case of using a cerium compound, or not less than 3 mol% nor more than 8 mol% in the case of using a dysprosium compound.

Examples of the yttrium compound used as the stabilizing agent include yttrium oxide ($Y_2O_3$), yttrium nitrate hexahydrate ($Y(NO_3)_3 \cdot 6H_2O$), yttrium chloride hexahydrate ($YCl_3 \cdot 6H_2O$) and yttrium acetate trihydrate ($Y(CH_3COO)_3 \cdot 3H_2O$) etc. It is also possible to use compounds of yttrium (Y) and aluminum (Al), such as $YAlO_3$ (YAP), $Y_3Al_5O_{12}$ (YAG) and $Y_4Al_5O_9$ (YAM) etc.

It is also possible to use, as the cerium compound used as the stabilizing agent, cerium oxide ($CeO_2$), cerium acetate ($Ce(C_2H_3O_2)_3 \cdot nH_2O$), cerium hydroxide ($Ce(OH)_4 \cdot nH_2O$), cerium chloride ($CeCl_3 \cdot nH_2O$) and ceric sulfate ($Ce(SO_4)_2$) etc.

It is also possible to use, as the dysprosium compound used as the stabilizing agent, dysprosium oxide ($Dy_2O_3$), dysprosium carbonate ($Dy_2(CO_3)_3$), dysprosium chloride ($DyCl_3$), dysprosium fluoride ($DyF_3$), dysprosium nitrate ($Dy(NO_3)_3 \cdot 5H_2O$) and dysprosium sulfate ($Dy_2(SO_4)_3 \cdot 8H_2O$) etc. Two or three kinds of these stabilizing agents may also be used in combination.

In the pinkish to purplish ceramics of the present invention, the strength varies depending on the content of the zirconium oxide that has not been stabilized (hereinafter, zirconium oxide that has not been stabilized is referred to as unstabilized zirconia, while zirconium oxide that has been stabilized is referred to as stabilized zirconia) relative to the zirconium oxide constituting the pinkish to purplish ceramics. When the content of the unstabilized zirconia is large, the strength decreases.

Herein, unstabilized zirconia has a monoclinic crystal structure at a normal temperature, and undergoes phase transition to a tetragonal crystal and then a cubic crystal in order while shrinking in volume when heated upon sintering. When cooled down, it undergoes phase transition to tetragonal and then monoclinic crystal structure while expanding in volume. Therefore, when the content of unstabilized zirconia is large, the unstabilized zirconia easily undergoes volume expansion inside a sintered body that would be turned into the pinkish to purplish ceramics when cooled down, thereby applying tensile stress toward the outside from the inside of the sintered body. As a result, the possibility of the occurrence of cracking increases and, even if no cracking occur, the possibility of lower strength may increases.

From such the viewpoint, it is preferable that the content of the unstabilized zirconia consisting of a monoclinic crystal is not more than 11% based on 100% by mass of the zirconium oxide, and the content of the unstabilized zirconia can be determined by conducting an analyze as follows. First, the content of metallic element of zirconium (Zr) is obtained by X-ray fluorescence_spectroscopy or ICP atomic emission spectrometry. The obtained content is converted to the weight of oxide so as to determine the content of total zirconia containing unstabilized zirconia and stabilized zirconia

Then, (111) and (11-1) reflection peak intensities of a monoclinic crystal and (111) reflection peak intensities of a tetragonal crystal and a cubic crystal measured by X-ray diffraction are used to calculate the ratio Xm of unstabilized zirconia by the following equation. (111) of a monoclinic crystal is denoted as Im(111), (11-1) of a monoclinic crystal is denoted as Im(11-1), and (111) of a tetragonal crystal and a cubic crystal are denoted as Itc(111).

$$Xm\ (\%) = (Im(111) + (Im(11\text{-}1))/(Im(111) + (Im(11\text{-}1) + Itc(111)) \times 100$$

It is possible to determine the content of unstabilized zirconia by multiplying the content of the entire zirconium oxide, that is determined by X-ray fluorescence spectroscopy or ICP atomic emission spectrometry and converted as an oxide, by the proportion of unstabilized zirconia.

It is preferable that the pinkish to purplish ceramics of the present invention have an apparent density of not less than 5.9 g/cm$^3$ nor more than 6.1 g/cm$^3$. When a value of the apparent density increases, open voids of the decorative surface of the pinkish to purplish ceramics decrease and crystal grains are suppressed from coming off from profiles of the open voids. In contrast, when the value of the apparent density decreases, mechanical properties tend to deteriorate. In order to suppress crystal grains from coming off without causing deterioration of mechanical properties, the apparent density is preferably not less than 5.9 g/cm$^3$ nor more than 6.1 g/cm$^3$. For example, it may be fired at a temperature in a range of 1,350°C to 1,550°C. This apparent density may be determined in accordance with JIS R 1634-1998.

It is preferable that the pinkish to purplish ceramics of the present invention have a three-point bending strength determined in accordance with JIS R 1601-1995 of not less than 900 MPa. This value is more than a bending strength 863 MPa of high-strength glass "Crysterna®" whose application as a cover glass for watch is disclosed in Marubeni America Corporation Sunnyvale office homepage; [searched on February 20, 2008] internet <http://www.marubeni-sunnyvale.com/high-strengthened-glass.html>.

In the pinkish to purplish ceramics of the present invention, the amount of open voids in the decorative surface exerts an influence on the degree of lightness or darkness of color tone, namely, the value of the lightness index L*. When the amount of open voids is large, the color tone of the surface becomes light as a result of the influence of variations in color due to profiles of open voids. Therefore, an occupied area ratio of open voids in the decorative surface is preferably not more than 0.2%. In order to adjust the value of the lightness index L* in a range of not less than 72 nor more than 85 which is a preferable range of the pinkish to purplish ceramics of the present invention, the occupied area ratio of open voids is preferably not more than 0.1%.

The occupied area ratio of open voids in the decorative surface of the pinkish to purplish ceramics of the present invention can be measured using a metallurgical microscope. Specifically, an image of the decorative surface of the pinkish to purplish ceramics of the present invention taken by a CCD camera with a magnification of 200 times is captured. Using an image analysis equipment (LUZEX-FS or a new model thereof, manufactured by Nireco Corporation), the total area of open voids of 20 visual fields was calculated with the measurement area of one visual field in this image being set to $2.25 \times 10^{-2}$ mm$^2$, with the measurement field number being set to 20, and then divided by the entire measurement area observed being set to $4.5 \times 10^{-1}$ mm$^2$, thus making it possible to determine the occupied area ratio of open voids.

In the decorative surface of the pinkish to purplish ceramics of the present invention, the size of an aperture diameter of open voids exerts an influence on variations in color. Therefore, a maximum aperture diameter of open voids is preferably not more than 50 $\mu$m. Meanwhile, the maximum aperture diameter of open voids can be measured using a metallurgical microscope. Specifically, under a magnification of 100 times, 5 points (an area per one point was set to area measuring 1, 235 $\mu$m $\times$ 926 $\mu$m) are extracted from the decorative surface of the pinkish to purplish ceramics, and the diameter of the largest open void is measured, thus making it possible to obtain the maximum aperture diameter.

The higher the luster of the pinkish to purplish ceramics of the present invention, the more the commercial value as the decorative component becomes higher. Therefore, the smaller the surface roughness, the more the ceramics become better. It is preferably to set an arithmetic mean height Ra of the decorative surface to not more than 0.03 $\mu$m. This arithmetic mean height Ra may be measured in accordance with JIS B 0601-2001. For example, in the case of disk-shaped pinkish to purplish ceramics, that have a diameter of 10 to 20 mm, the arithmetic mean height is measured by using a contact probe type surface roughness meter, with the measurement length and the cut-off point being set to 5 mm and 0.8 mm, respectively, and putting a stylus having a tip radius of 2 $\mu$m into contact with the decorative surface of the ceramics, and scanning at a speed of 0.5 mm/sec.

In the pinkish to purplish ceramics of the present invention, Vickers hardness (Hv) of the decorative surface is one of factors that exert an influence on long-term reliability, and the Vickers hardness (Hv) is preferably not less than 11 GPa. When the Vickers hardness (Hv) is not less than 11 GPa, scratches are not easily formed on the decorative surface even when a surface of the pinkish to purplish ceramics is contacted with substances having high hardness, such as dusts composed of glass or metal. The Vickers hardness (Hv) of the decorative surface can be measured in accordance with JIS R 1610-2003.

The pinkish to purplish ceramics of the present invention may sometimes contain, as an inevitable impurity, allergic metals, such as mercury (Hg), nickel (Ni), tin (Sn) and palladium (Pd) etc. The content of the allergic metal contained as the inevitable impurity is preferably not more than 0.1% by mass based on 100% by mass of the pinkish to purplish ceramics. With respect to the content of these allergic metals, semi-quantitative analysis of elements is performed by a FR method using an X-ray fluorescence analyzer, or the content can also be determined by ICP atomic emission spectrometry.

The pinkish to purplish ceramics of the present invention may sometimes contain, as an inevitable impurity, silicon dioxide (SiO$_2$), sodium oxide (Na$_2$O), boron oxide (B$_2$O$_3$) and boron nitride (BN) having a strong tendency to cause whitening. It is preferable that each content of silicon dioxide (SiO$_2$), sodium oxide (Na$_2$O), boron oxide (B$_2$O$_3$)

and boron nitride (BN) contained as the inevitable impurity is not more than 0.5% by mass based on 100% by mass of all components constituting the pinkish to purplish ceramics, respectively, and the total content is not more than 0.5% by mass.

It is preferable that the pinkish to purplish ceramics of the present invention do not substantially contain cobalt oxide (CoO), manganese oxide ($MnO_2$), vanadium oxide ($V_2O_5$), tin oxide ($SnO_2$) and silver oxide ($Ag_2O$) and boron carbide ($B_4C$) having a strong tendency to cause blackening, and each content is preferably not more than 0.1% by mass based on 100% by mass of all components constituting the pinkish to purplish ceramics, respectively. The content of these components can be determined by conducting semi-quantitative analysis of elements by a FR method using an X-ray fluorescence analyzer, or converting the content of each element determined by an ICP atomic emission spectrometry to that of oxide, nitride or carbide according to the compound constituted from each element.

The decorative component for watch of the present invention is characterized in that it is constituted from the pinkish to purplish ceramics having the above constitution, and examples thereof include watch case, and links of watchband.

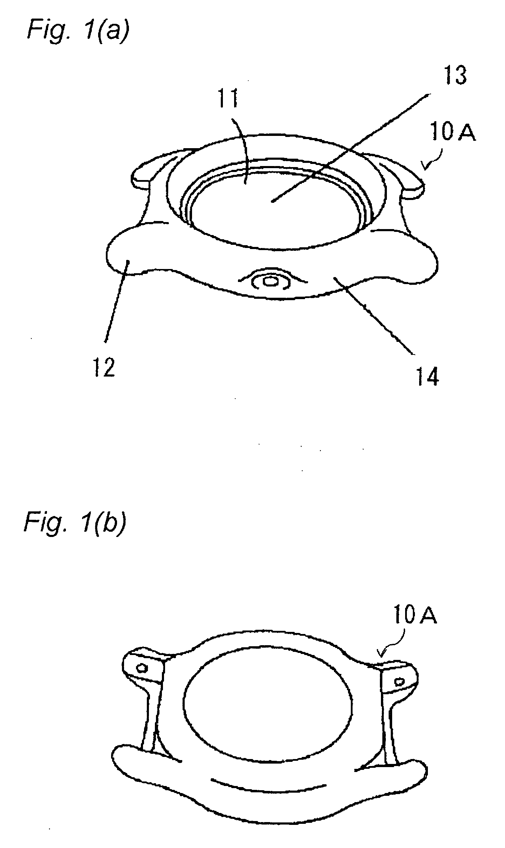

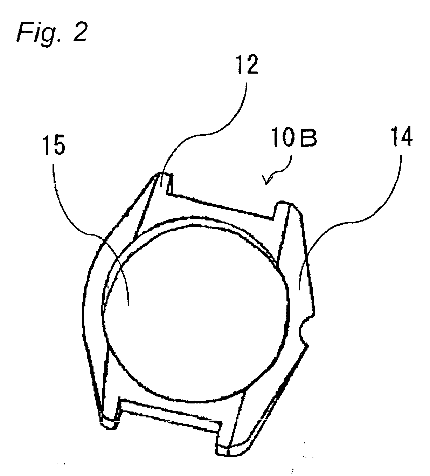

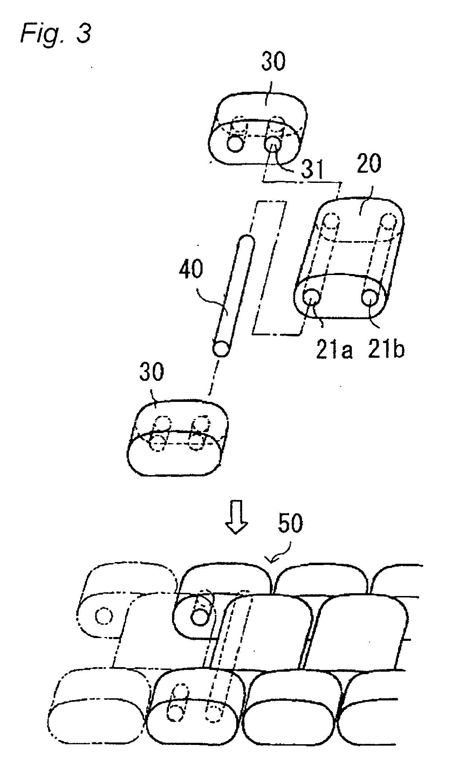

Fig. 1 shows an example of a watch case that is a decorative component for watch of the present invention, Fig. 1(a) is a perspective view of the watch case as seen from the front side, and Fig. 1(b) is a perspective view of the watch case of Fig. 1(a) as seen from the back side. Fig. 2 is a perspective view showing another example of the watch case that is the decorative component for watch of the present invention. Fig. 3 is a schematic diagram showing an example of constitution of the watchband that is the decorative component for watch of the present invention. Identical members are denoted with the same reference numeral in these drawings.

A watch case 10A shown in Fig. 1 has a recess 11 that houses a movement (drive mechanism) not shown, and legs 12 which engage a watchband (not shown) for wearing the watch on a wrist, and the recess 11 is constituted from a thin bottom 13 and a thick case body 14. The watch case 10B shown in Fig. 2 has a hole 15 that accommodates a movement (drive mechanism) not shown, and legs 12 formed on the case body 14 which engage a watchband (not shown) for wearing the watch on a wrist.

The band links that constitute the watchband 50 shown in Fig. 3 include: inner links 20 each having through hole 21 into which a pin 40 is inserted; and outer links 30 being disposed to sandwich the inner link 20 and each having pin holes 31 in which the ends of the pin 40 are inserted. The inner link 20 and the outer links 30 are sequentially linked with each other by inserting the pin 40 into the through hole 21 of the inner link 20, and engaging both ends of the inserted pin 40 in the pin holes 31 of the outer links 30, thereby to assemble the watchband 50.

The decorative components for watch of the present invention used as the watch cases 10A, 10B and the links that constitute the watch band 50 are formed from the pinkish to purplish ceramics of the present invention, and therefore the obtained watch allows users to have satisfying feeling of owning the watch, by pinkish to purplish color tone that makes users to feel gentleness and mild warmness, thus making it possible to exert a higher healing effect on users and to make them to feel elegance.

Since a tensile load is frequently applied to inner links 20 as a portion of watch band links, the tensile strength of the pinkish to purplish ceramics of the present invention is preferably not less than 196 N. In order to determine the tensile strength, after inserting a pin made of cemented carbide (not shown) that is longer than the length of through hole 21 into through holes 21a, 21b of inner links 20 and pulling them in a separation direction, the strength upon breakage of inner links 20 may be read by a load cell.

When the watch case or watch band links are formed of the pinkish to purplish ceramics of the present invention, taking an adverse influence on a movement (drive mechanism) (not shown) into consideration, the content of ferromagnetic metal having mass magnetization of not less than 162 $G \cdot cm^3/g$, for example, cobalt (Co) is preferably not more than 0.1% by mass based on 100% by mass of the pinkish to purplish ceramics.

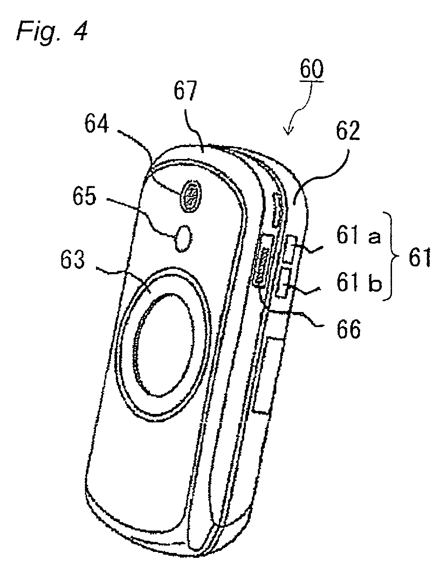

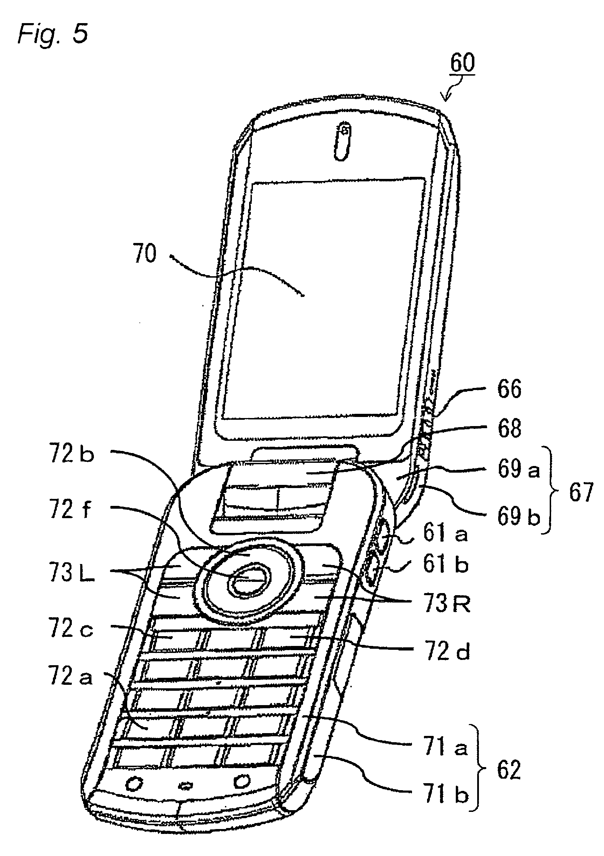

Next, Fig. 4 is a perspective view showing an example of mobile phone that uses a decorative component for mobile terminal of the present invention. Fig. 5 is a perspective view showing the mobile phone shown in Fig. 4 in a state of chassis opened.

The decorative component for mobile terminal of the present invention is formed from the pinkish to ceramics of the present invention, and specific examples thereof include various control keys and cases shown in Fig. 5.

The mobile phone 60 of the example shown in Fig. 4 includes: a mode key 61 consisting of change key 61a for changing the mode of the mobile phone 60 to a radio mode for listening to radio broadcast, a music mode for listening to music and the like, and a silencer key 61b for putting the mobile phone 60 into silent mode which are provided on a first chassis 62; a touch sensor 63 for entering commands by inspecting touch with a finger or the like thereon; a camera 64 for capturing an image; a light 65; and a slide switch 66 for setting enabling or disabling the entry through the touch sensor 63 and the like which are provided on a second chassis 67.

And an example of the mobile phone 60 as shown in Fig. 5 is in a state where the second chassis 67 remains opened. The first chassis 62 and the second chassis 67 are linked to each other via a hinge 68, so that the second chassis 67 can be freely opened. The second chassis 67 has a front case 69a and a rear case 69b, while a liquid crystal display 70 is provided on the front case 69a.

The first chassis 62 also includes a front case 71a and a rear case 71b, while various control keys are provided on the front case 71a. The control keys include numeric keys 72a for entering telephone numbers, cursor movement keys 72b for moving the cursor over various functions menu, a talk key 72c to be pressed to start talking when receiving a call, a power/hang up key 72d for turning the power on or off and hanging up the line to end talking, a center key 72f which is disposed at the center of the cursor movement key 72b, and function keys 73L, 73R disposed on the left and right sides of the cursor movement key 72b, etc.

When at least one kind of the front cases 69a and 71a and the rear cases 69b and 71b as the above cases, the numeral keys 72a as the control keys, the cursor movement keys 72b, the talk key 72c, the power/hang up key 72d, the center key 72f, the function keys 73L, 73R, etc. is formed from the pinkish to purplish ceramics of the present invention, the obtained mobile phone makes users to feel gentleness and mild warmness, thus making it possible to exert a higher healing effect on users and to make them to feel elegance. Therefore, the mobile phone allows users to have satisfying feeling of owning the mobile phone 60 that develops such color tone. Also because the pinkish to purplish ceramics of the present invention have favorable property for color coordination, it is capable of satisfying the diversity of user's preference by combining with members of various color tones.

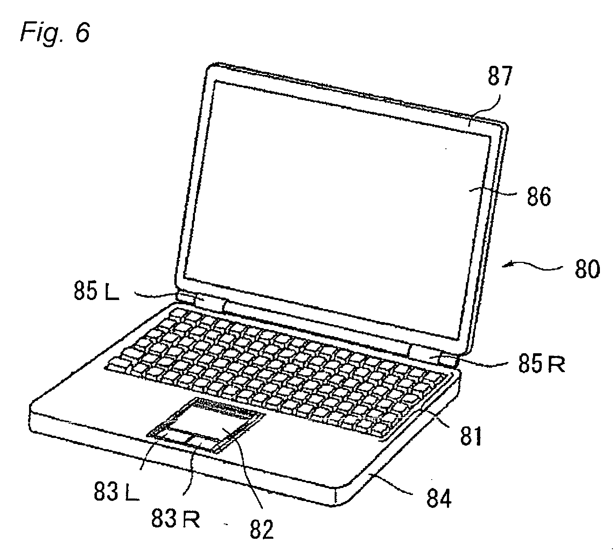

Next, Fig. 6 is a perspective view showing an example of a note-type personal computer that uses a decorative component for mobile terminal of the present invention.

A note-type personal computer 80 shown in Fig. 6 consists of: a body side casing 84 equipped with a keyboard 81, a track pad 82 and button switches 83L, 83R; and a display side casing 87 equipped with a display 86 fixed to the body side casing 84 through hinges 85L, 85R so as to be capable of freely opening and closing.

The keyboard 81 consists of a plurality of keys and enables input of characters and call up of functions by pushing keys. The track pad 82 consists of a pressure-sensitive or electrostatic pointing device and is used for move of a pointer and command input on a screen of the display 86. For example, it is used for specification of the file icon displayed on the display 86 and selection of application programs, and is also used for drag of the icon on the display 86 and plural selections of character string on a text file by a combination operation of button switches 83L, 83R.

The button switch 83L is used for command such as opening and closing of a file specified or selected by a pointing function of the track pad 82, or execution of processing, in addition to the above combination operation. The button switch 83R has a function to display a context menu on a screen of a display 86, and to display attributed information of the file specified or selected by a pointing function of the track pad 82. The context menu as used herein means a function to pop up display a selectable processing on the screen of the display 86.

When at least any one kind of the keys and the button switched 83a, 83b of the above keyboard 81 is formed from the pinkish to purplish ceramics of the present invention, the obtained note PC allows users to have satisfying feeling of owning the note PC 80 of such color tone, by pinkish to purplish color tone that makes users to feel gentleness and mild warmness, thus making it possible to exert a higher healing effect on users and to make them to feel elegance.

A description was made using the mobile phone 60 and the note-type personal computer 80 as an example of mobile terminals. However, application of the ceramics for decorative component of the present invention to mobile terminal is not limited to the mobile phone60 and the note-type personal computer 80. The present invention can be applied to various portable information terminals, whose components are required to have decorative value, such as portable information terminal (PDA: Personal Digital Assistant), portable car navigation system and portable audio player.

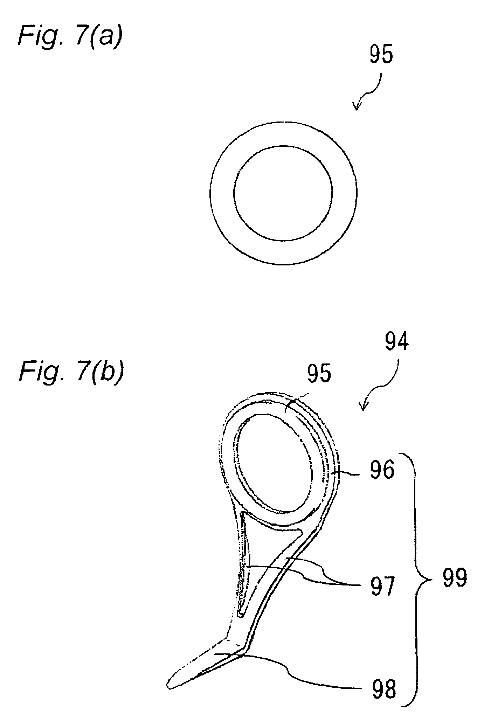

Next, Fig. 7 shows a fish line guide ring that is a decorative component for fish line guide of the present invention, and an example of a fish line guide provided with the fish line guide ring, Fig. 7(a) is a plan view of the fish line guide ring, and Fig. 7(b) is a perspective view of a fish line guide provided with the fish line guide ring shown in Fig. 7(a).

The fish line guide ring 95 as an example shown in Fig. 7 is used to guide a fish line (not shown) inserted through the inside thereof. The fish line guide 94 is made by incorporating the fish line guide ring 95 to a frame 99 which comprises a holding section 96 for holding the fish line guide ring 95, a support section 97 for the holding section 96 and a mount section 98 fastened onto a fishing rod (not shown) being integrally formed. When the fish line guide ring 95 is formed of the pinkish to purplish ceramics of the present invention, the obtained fish line guide ring can exert a healing effect on uses and make users to feel elegance.

The fish line guide ring 95 having pinkish to purplish color tone has favorable coordination with color tone of the fishing line guide 94 and the fishing rod, and therefore the fish line guide ring can be preferably used for a fishing tackle. In particular, the fish line guide ring develops pinkish to purplish color tone, and therefore the fish line guide ring can be preferably used for a fishing tackle favored by lady anglers increasing recently. Furthermore, since blur is less likely to occur at the periphery of the portion irradiated with laser beam, it is possible to enhance the commercial value by marking bland logo. The fish line guide ring 95 may be coated on the surface thereof with a transparent film having high wear resistance, for example, a film made of hard amorphous carbon thereby further improving the wear resistance.

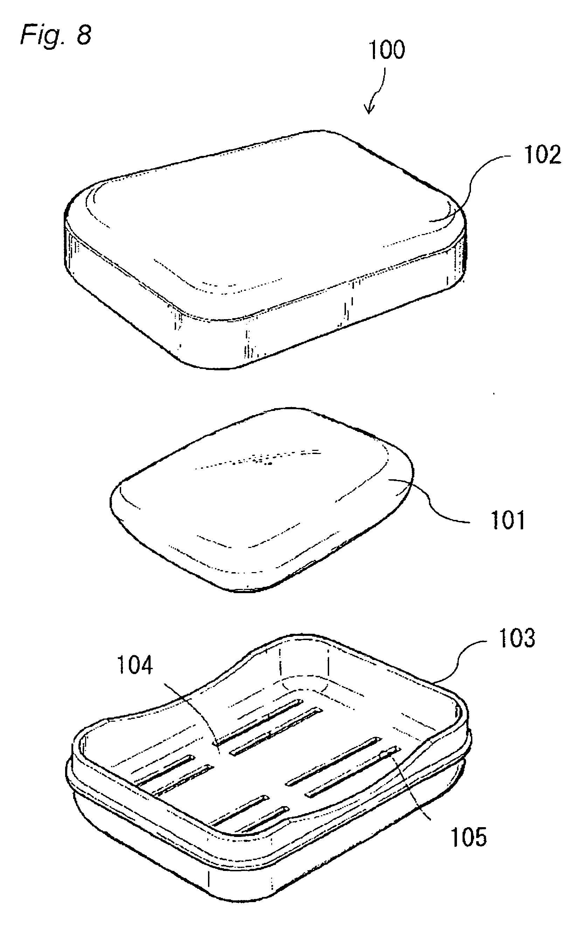

Next, Fig. 8 is a schematic diagram showing an example of constitution of a soap case that is a decorative component for daily life articles of the present invention.

The soap case 100 according to the example as shown in Fig. 8 consists of a case body 103 and a cap 102, wherein a placing surface 104 of the case body 103 whereon a soap 101 is to be placed includes draining slits 105 for draining water carried by the soap 101 formed therein. When the soap 101 is not used, the soap 101 is placed on the placing surface 104 of the case body 103, and is accommodated by putting the cap 102 onto the case body 103. When the soap 101 is used, the cap 102 is removed from the case body 103 to take out the soap 101 therefrom. By placing the soap 101 on the placing surface 104 of the case body 103 after use, water adhered on the soap 101 can be drained through the drain slits 105, so as to prevent the soap 101 from being soaked with water.

By forming the cap 102 or the case body 103 of the soap case 100 from the pinkish to purplish ceramics of the present invention, it is made possible to allow users to have satisfying feeling of owning it, to exert a higher healing effect on users and to make them to feel elegance through visual sense during use.

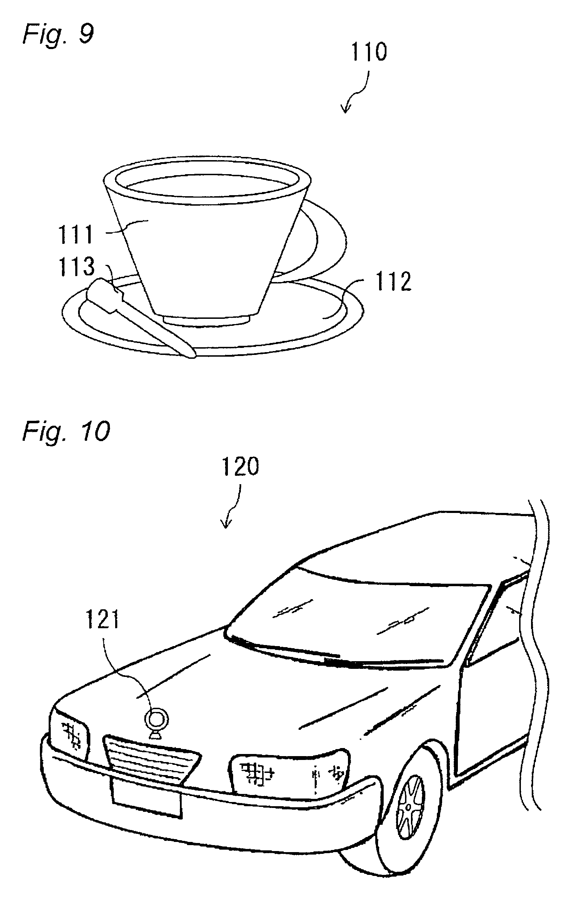

Next, Fig. 9 is a perspective view showing an example of a coffee cup set that is another example of a decorative component for daily life articles of the present invention.

The coffee cup set 110 shown in Fig. 9 consists of a coffee cup 111, a saucer 112 and a spoon 113. By forming the coffee cup 111, the saucer 112 and the spoon 113 from the pinkish to purplish ceramics of the present invention, it is made possible to allow users to have satisfying feeling of owning it, to exert a higher healing effect on users and to make them to feel elegance through visual sense during use.

Since the pinkish to purplish ceramics of the present invention have favorable property for color coordination, at least one of the coffee cup 111, the saucer 112 and the spoon 113 can be formed from the pinkish to purplish ceramics of the present invention, and can also be used in combination with other members having different color tones.

The decorative component for daily life articles of the present invention can be preferably applied to, in addition to the soap case 100 and the coffee cup set 110, the handle of tooth brush or shaver, earpick, scissors and other decorative component for daily life articles. By using the pinkish to purplish ceramics of the present invention for toiletry goods marked with various logos in the bath rooms and toilet rooms of a luxury hotel, it is made possible to exert a higher healing effect and to make them to feel elegance.

Next, Fig. 10 is a perspective view showing an example of a vehicle body having a decorative component for vehicle parts of the present invention mounted thereon.

The vehicle body 120 shown in Fig. 10 has an emblem 121 which is decorative component for vehicle parts mounted thereon. By forming the emblem 121 from the pinkish to purplish ceramics of the present invention, it is made possible to improve the decorative value of the vehicle body 120, to exert a higher healing effect on users and to make them to feel elegance. While Fig. 10 shows the emblem 121 that is mounted on the front of the vehicle body 120, decorative value of the vehicle body 120 can be improved also by attaching the emblem 121 formed from the pinkish to purplish ceramics of the present invention that shows the manufacturer's name or the model name, on the rear of the vehicle body 120.

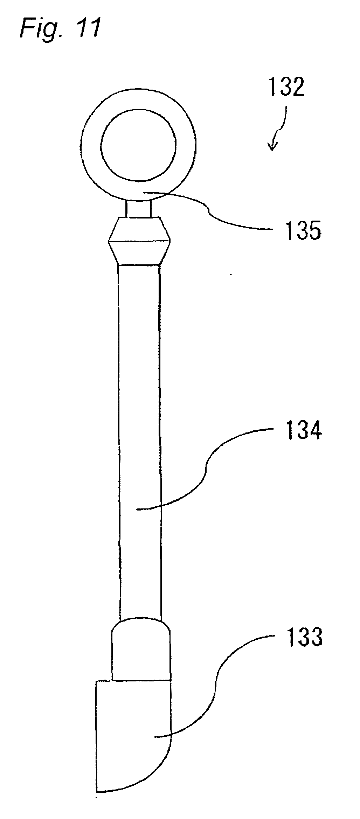

Fig. 11 is a front view showing an example of corner pole that uses the decorative component for vehicle parts of the present invention.

The corner pole 132 shown in Fig. 11 is installed so as to mark the left front corner of the vehicle (in the case of a right-hand drive vehicle) which is difficult to be seen from the driver seat when moving in or out of a parking lot, and comprises a mount 133 to be fastened onto the vehicle body, a pole unit 134 and a lighting unit 135 consisting of LED or the like. It is preferred to form the pole unit 134 of the corner pole 132 from the pinkish to purplish ceramics of the present invention, or mounting the emblem formed from the pinkish to purplish ceramics of the present invention instead of the lighting unit 135, so as to improve decorative value of the vehicle body as well as of the corner pole 132.

In addition to the emblem 121 and the corner pole 132, the decorative component for vehicle parts of the present invention may be applied to a part of wheel cap, a part of hood ornament mounted on the bonnet of the vehicle body, small articles and accessories installed within the vehicle or a part thereof, with favorable effect of improving the decorative value.

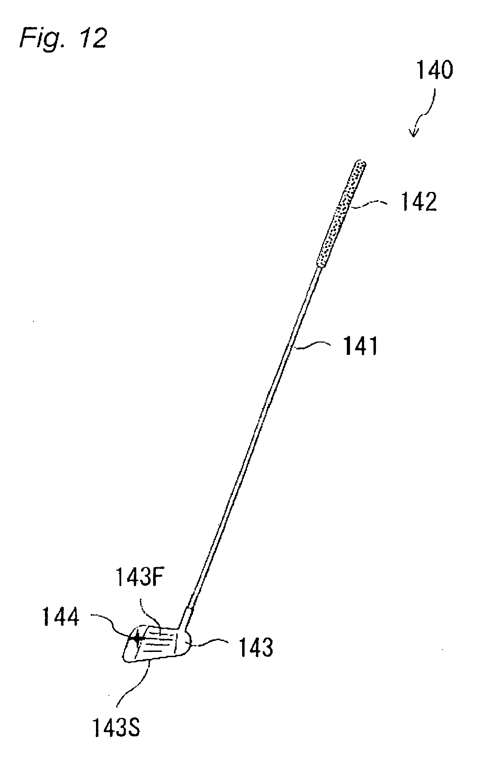

Next, Fig. 12 is a front view showing an example of golf club that uses the decorative component for sports goods of the present invention.

The golf club 140 shown in Fig. 12 includes a shaft 141, a grip 142 attached to one end of the shaft 141 and a head 143 attached to the other end of the shaft 141. The head 143 includes an impact face 143F that hits a golf ball, and a sole surface 1435 that touches the ground. It is preferred to embed an accessory 144 formed from the pinkish to purplish ceramics of the present invention in the impact face 143F, as shown in Fig. 12, since the decorative value is improved. It is preferred that, in addition to the impact face 143F, the accessory 144 formed from the pinkish to purplish ceramics of the present invention is embedded in the sole surface 143S or the grip 142.

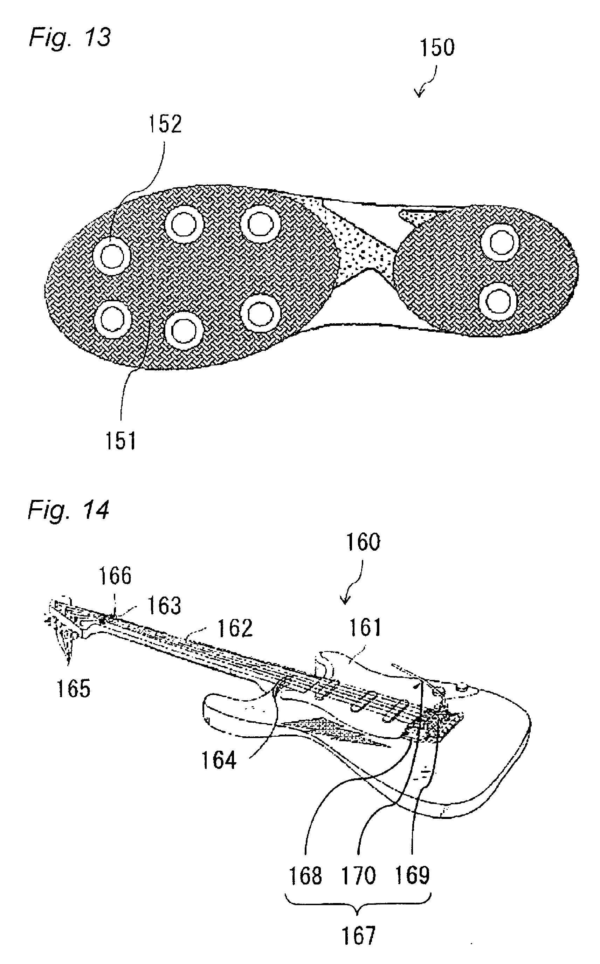

Fig. 13 is a bottom view showing an example of spike shoes that uses the decorative component for sports goods of the present invention.

The spike shoes 150 shown in Fig. 13 are used in, for example, soccer or rugby, and has a plurality of studs 152 planted in sole 151 to protrude therefrom so as to stabilize a pivot foot when kicking a ball. The studs 152 formed from the ceramics for decorative component of the present invention have the effects of, besides the improvement in decorative value, higher wear resistance than that of studs made of aluminum alloy that have hitherto been used, so as to decrease the frequency of replacement of the studs 152, and thereby reducing the cost incurred from the replacement.

The studs 152 may be covered by a transparent resin to prevent the studs 152 from being chipped during a game.

Next, Fig. 14 is a perspective view showing an example of guitar that uses the decorative component for musical instrument of the present invention.

The guitar 160 shown in Fig. 14 consists mainly of a body 161 and a neck 162 that extends forward from the body 161. Disposed near the distal end of the neck 162 is a nut 163, and a tuning peg 165 capable of adjusting the tension of the string 164 is provided beyond the nut 163 for each of strings 164. A clamp mechanism 166 is provided near the nut 163 so as to hold the strings 164 and to prevent from moving with respect to the nut 163.

The body 161 has a tremolo arm 167 for producing impressive sound effect by increasing or decreasing the tensions of the strings 164 at the same time. The tremolo arm 167 includes: a base plate 168 that is attached to the body 161; a bridge saddle 169 that is held on the base plate 168 and holds the strings 164 in tunable state; and a tremolo bar 170 that actuates the tremolo arm 167. By forming the base plate 168, the bridge saddle 169, the tremolo bar 170 or the like of this guitar 160 from the pinkish to purplish ceramics of the present invention, it is made possible to improve the decorative value of the guitar 160. This provides the joy of possessing the guitar 160 and helps to captivate a large audience.

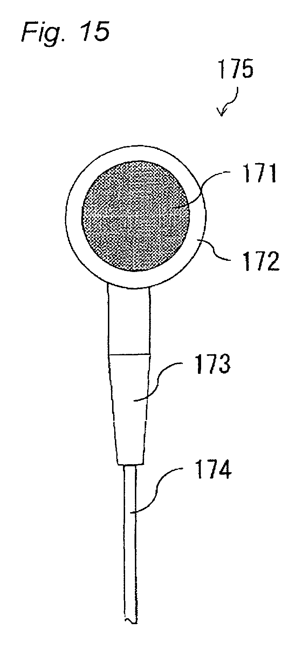

Next, Fig. 15 is a front view showing an example of earphone unit that uses the decorative component for accessory of the present invention.

The earphone unit 175 shown in Fig. 15 includes a speaker 171 that is inserted into the ear of the listener to produce sound waves, a case 172 that houses the speaker 171, and a cord 174 that feeds electric signals to the speaker 171 via a lead 173 that is in contact with the case 172.

By forming the case 172 of the earphone unit 175 from the pinkish to purplish ceramics of the present invention, it is made possible to improve the decorative value, to allow users to have satisfying feeling of owning it, to exert a higher healing effect and to make them to feel elegance through visual sense during use.

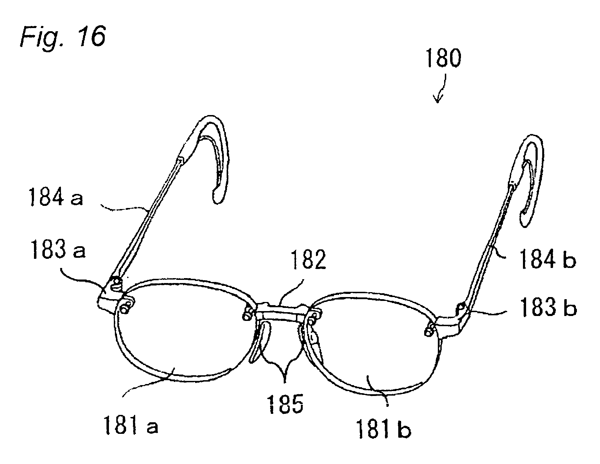

Fig. 16 is a perspective view showing an example of eyeglass frame that uses the decorative component for accessory of the present invention.

The eyeglasses 180 shown in Fig. 16 includes: a pair of lenses 181a, 181b that provide vision correction or protection of eyes against ultraviolet rays; a bridge 182 that links the pair of lenses 181a, 181b together; armors 183a, 183b that connect to the respective lenses 181a, 181b; temples 184a, 184b that connect to the armors 183a, 183b so as to be capable of swiveling through the hinge; and a nose pad 185 attached via nose pad link members to the lenses 181a, 181b, respectively.

By forming at least one of the bridge 182, the temples 184a, 184b and the nose pad 185 of this eyeglasses 180 from the pinkish to purplish ceramics of the present invention, it is made possible to improve the fashionability and the decorative value, to allow users to have satisfying feeling of owning it, to exert a higher healing effect and to make them to feel elegance through visual sense during use.

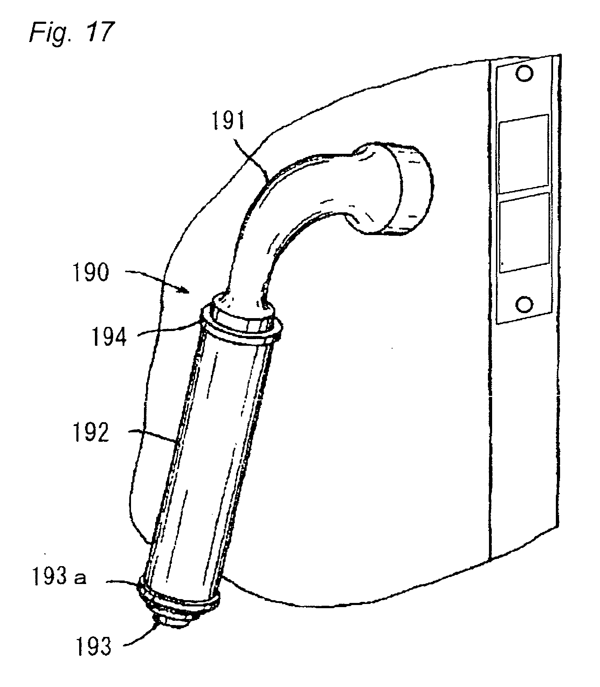

Next, Fig. 17 is a perspective view showing an example of grip for door handle that uses the decorative component for architectural materials of the present invention.

A door handle 190 shown in Fig. 17 includes a body 191 extending in an L-shape and a cylindrical grip 192 fitted to the end of the body 191, and the grip 192 is fixed to the body 191 by pressing the grip 192 by means of a nut 193 having a flange 193a formed thereon, from an anterior end of the grip 192, and a flange 194, from a posterior end of the grip 192.

By forming the grip 192 of the door handle 190 from the pinkish to purplish ceramics of the present invention, it is made possible to provide the decorative component for architectural materials for improving the decorative value, exerting a higher healing effect and making them to feel elegance through visual sense during use.

An example of the method for producing the pinkish to purplish ceramics of the present invention will be described below.

In order to obtain the pinkish to purplish ceramics of the present invention, first, weighing is conducted so that the content of a powder of at least one kind of a coloring agent selected from erbium oxide ($Er_2O_3$), europium oxide ($Eu_2O_3$) and holmium oxide ($Ho_2O_3$) is in a range from 3.0 to 15.0% by mass, the content of a powder of aluminum oxide ($Al_2O_3$) is in a range from 0.6 to 5.0% by mass and the remainder is a powder of zirconium oxide ($ZrO_2$).

Meanwhile, the powder of zirconium oxide may be a mixed powder comprising 88 to 99 mol% of a powder of zirconium oxide and 1 to 12 mol% of a powder of at least one kind of a stabilizing agent selected from yttrium oxide ($Y_2O_3$), cerium oxide ($CeO_2$), magnesium oxide ($MgO$), neodymium oxide ($Nd_2O_3$) and calcium oxide ($CaO$) or a powder of zirconium oxide produced by adding a stabilizing agent using a coprecipitation method. The respective powders thus weighed and water as a solvent are charged in a vibrating mill, a beads mill, a sand mill, an agitator mill or a ball mill, followed by mixing and grinding.

In order to obtain the pinkish to purplish ceramics that are dense but have hardness required to a decorative component, 0.1 to 1.0% by mass of a powder of zinc oxide may be added, in addition to the respective powders of zirconium oxide containing stabilizing agent, aluminum oxide and a coloring agent. If necessary, 0.5 to 3.0% by mass of a powder of hafnium oxide ($HfO_2$ may be added. Also, a powder of zirconium oxide containing hafnium oxide may be used.

Beads and balls used in mixing and grinding are important elements in order that the pinkish to purplish ceramics of the present invention have a lightness index L* in a range of not less than 72 nor more than 85, a chromaticness indice a* in a range of not less than 7 nor more than 20 and a chromaticness indice b* in a range of not less than -6 nor more than 2 in the L*a*b* color space of CIE1976 of the surface. Therefore, it is preferred to use beads and balls having pinkish to purplish color tone, that are procuded to have the composition similar to that of the pinkish to purplish ceramics of the present invention, and having the values of the lightness index L* and chromaticness indices a* and b* in the L*a*b* color space of CIE1976 of the surface similar to the values thereof.

Next, a predetermined amount of paraffin wax as a binder is added to a slurry obtained by mixing and grinding, and the mixture is dried by a spray drying method to obtain granules. The obtained granules are formed into a desired shape such as a disk, a flat plate, a columnar body, a circular ring or the like by a desired molding method, for example, a dry pressure molding method, a cold isostatic pressure molding method or the like. If the product has a complicated shape, a molding may be obtained by a cast molding method or an injection molding method using a slurry prepared by adding a solvent, a binder or the like to the slurry obtained by mixing and grinding. It is also possible to obtain a molding by forming into a block shape or a shape close to a shape of the product by various molding methods, followed by cutting. The obtained molding is optionally degreased and then fired in an air atmosphere to obtain a sintered body.

At this time, when the sintering temperature is low, the degree of sintering is not sufficient. In contrast, when the sintering temperature is high, crystals of the sintered body causes abnormal grain growth and mechanical properties deteriorate. Therefore, it is preferable to sinter the pinkish to purplish ceramics of the present invention at a temperature of not lower than 1,350°C nor higher than 1,500°C. By controlling the sintering temperature in the above range, the pinkish to purplish ceramics are sufficiently sintered to attain the apparent density of the pinkish to purplish ceramics in a range of not less than 5.9 g/cm$^3$ nor more than 6.1 g/cm$^3$, thus making it possible to obtain the pinkish to purplish ceramics with excellent mechanical properties without causing insufficient sintering or abnormal grain growth of crystals of the sintered body.

As a result of barrel polishing of the obtained sintered body, it is possible to obtain the pinkish to purplish ceramics of the present invention in which the surface of the sintered body would be turned into a decorative surface of pinkish to purplish color tone that makes many users to feel gentleness and mild warmness, thus making it possible to exert a high healing effect and make them to feel elegance. Barrel polishing may be conducted for about 24 hours by a wet type centrifugal barrel polisher using media and green carborundum (GC). Before barrel polishing, the sintered body may be optionally subjected to grinding work so as to impart a shape of the product. It is also possible to conduct a lapping operation by feeding a diamond paste having a small mean particle size of not more than 1 pm to a lapping machine made of tin.

When a dry pressure molding method is selected as the molding method, the molding pressure exerts an influence on the occupied area ratio of open voids in the surface, maximum aperture diameter of open voids, and Vickers hardness (Hv). When the molding pressure is increased, it is possible to decrease the occupied area ratio and maximum aperture diameter of open voids and to increase Vickers hardness (Hv). In order to obtain pinkish to purplish color tone of the present invention, the molding pressure is preferably controlled to not less than 49 MPa nor more than 196 MPa. When the molding pressure is controlled in the above range, it is possible to control the occupied area ratio of open voids in the surface of the pinkish to purplish color tone of the present invention to not more than 0.2% and to increase Vickers hardness (Hv), and to elongate service life of the molding die. In particular, the molding pressure is more preferably not less than 96 MPa nor more than 196 MPa because the maximum aperture diameter of open voids in the surface can be controlled to not more than 50 $\mu$m.

The pinkish to purplish ceramics obtained described above of the present invention develop pinkish to purplish color tone that makes users to feel gentleness and mild warmness, thus making it possible to exert a high healing effect on uses and makes them to feel elegance. Therefore, the pinkish to purplish ceramics of the present invention can be preferably used in a decorative component for watch, such as watch case or watch band links etc.; a decorative component for mobile terminal such as various keys that is operated by pushing, and case etc.; a decorative component for fish line guide, such as a fish line guide ring etc.; a decorative component for daily life articles, such as a soap case or a coffee cup set etc.; a decorative component for vehicle parts, such as an emblem of a manufacturer or a model name, or a corner pole etc.; a decorative component for sports goods, such as an accessory of a golf club, or studs of spiked shoes etc.; a decorative component for musical instrument, such as a base plate of a guitar etc.; a decorative component for accessory, such as a case of an earphone unit, or a bridge of eyeglasses etc.; and decorative component for architectural materials, such as door handle etc.

In addition to these, the pinkish to purplish ceramics of the present invention can be preferably used in a decorative component for accessory, such as broach, necklace, earring, ring, bracelet, anklet, tiepin, tie tack, medal, button, knife, folk, handle of tooth brush or shaver, earpick, scissors, materials for seals, and business card; a decorative component for architectural materials, such as tiles for decorating floor, wall and ceiling; and another decorative components for household appliances. If decorativeness is required to the parts, the pinkish to purplish ceramics of the present invention can also be preferably used in a wristwatch type mobile phone having both of a function of a watch and a function of a mobile phone as a result of complexation of the watch and the mobile phone.

As energy beam used when the pinkish to purplish ceramics of the present invention are subjected to marking of characters, serial No., etc. for the purpose of display, identification and management, not only laser beam but also X-ray, electron beam and neutron beam may be used, and the output is preferably not less than 2 Kw.

Example 1

Examples of the present invention will be specifically described, but the present invention is not limited to the following Examples.

After weighing in order that the contents of the respective powders of erbium oxide ($Er_2O_3$), europium oxide ($Eu_2O_3$), holmium oxide ($Ho_2O_3$), aluminum oxide ($Al_2O_3$) and zinc oxide (ZnO) become the contents shown in Table 1 and Table 2 based on 100 parts by mass of a mixed powder comprising 98 mol% of a powder of zirconium oxide ($ZrO_2$) and 2 mol% of a powder of yttrium oxide ($Y_2O_3$) as a stabilizing agent, these materials were charged in a vibrating mill, together with water as a solvent, followed by mixing and grinding. In the case of mixing and grinding, balls that contain zirconium oxide as the main component and develop pinkish to purplish color tone were used.

Next, a predetermined amount of paraffin wax as a binder was added to the slurry obtained by mixing and grinding and the mixture was dried by a spray drying method to obtain granules. For each specimen, a plurality of moldings that would be turned into inner links 20 of band links shown in Fig. 3 were made under a pressure of 98 MPa by a dry pressure molding method, and the obtained moldings were sintered at 1,450°C to obtain sintered bodies. The obtained sintered bodies were put in a centrifugal barrel polisher using media green carborundum (GC) and then subjected to wet type barrel polishing for 24 hours to obtain inner links 20 of band links.

After visually confirming the color tone, the values of the lightness index L* and the chromaticness indices a* and b* in the L*a*b* color space of CIE1976 of the decorative surface of inner links 20 of band links were measured in accordance with JIS Z 8722-2000, using a colorimeter (CR-221, manufactured by the former Minolta Co., Ltd.) in combination with a CIE standard light source D65 as a light source in a light receiving method set under the conditions a ((45-n)[45-0]) with the measurement diameter being set to 3 mm.

The color tone was evaluated by 40 monitors comprising 5 male and 5 female monitors in Europe in each of 4 age brackets from 20s to 50s, by responding to questionnaire asking how they felt about 2 items of quality; healing effect and feeling of elegance. Percentage of the monitors responded positively for healing effect and feeling of elegance was calculated by each item and an average of 2 items was determined. Evaluation by monitors was conducted in a state where inner links 20 of a plurality of samples like watch bands are arranged.

The respective contents of erbium oxide, europium oxide, holmium oxide, aluminum oxide and zinc oxide were obtained by semi-quantitative analysis of elements using an X-ray fluorescence analyzer by a FP method, and converting the content to that of oxide.

Relative density of the respective inner links 20 was calculated by the Archimedian method and hardness in the decorative surface of the respective inner links 20 was measured in terms of Vickers hardness (Hv) in accordance with JIS R 1610-2003.

In a nitrogen atmosphere, the respective inner links 20 was marked with alphabetic characters on the surface by a laser processing method under the conditions of an output of 5 Kw and a spot diameter of laser beam to be irradiated of 0.15 mm. Samples in which blur was visually observed at the periphery of the marked portions were rated "Yes", whereas, samples in which blur was not visually observed were rated "None". Samples in which an average of 2 items of questionnaire is not less than 80% and blur is "None" were rated "Good", whereas, samples in which an average of 2 items of questionnaire is less than 80% and blur is "Yes" were rated "Bad", and comprehensive evaluation was conducted. The results are shown in Table 1 and Table 2.

Table 1

| Sample No. | Er$_2$O$_3$ (% by mass) | Eu$_2$O$_3$ (% by mass) | Ho$_2$O$_3$ (% by mass) | Al$_2$O$_3$ (% by mass) | ZnO (% by mass) | Color tone | Lightness index L* | Chromaticness indices | |
|---|---|---|---|---|---|---|---|---|---|
| | | | | | | | | a* | b* |
| *1 | 2.2 | 0 | 0 | 0.5 | 0.3 | Light pink color | 80 | 5 | -2 |
| *2 | 2.2 | 0 | 0 | 2.2 | 0.3 | Light pink color | 83 | 6 | -3 |
| *3 | 2.8 | 0 | 0 | 0.5 | 0.3 | Light pink color | 79 | 6 | -2 |
| *4 | 2.8 | 0 | 0 | 4.0 | 0.3 | Light pink color | 86 | 6 | -3 |
| *5 | 2.8 | 0 | 0 | 5.2 | 0.3 | Light pink color | 92 | 6 | -3 |
| 6 | 3.0 | 0 | 0 | 0.6 | 0.3 | Pink color | 79 | 8 | -2 |
| 7 | 3.0 | 0 | 0 | 2.2 | 0.3 | Pink color | 82 | 8 | -3 |
| 8 | 3.0 | 0 | 0 | 3.8 | 0.3 | Pink color | 85 | 8 | -3 |
| 9 | 3.0 | 0 | 0 | 4.0 | 0.3 | Pink color | 86 | 8 | -3 |
| *10 | 3.0 | 0 | 0 | 5.2 | 0.3 | Light pink color | 91 | 8 | -3 |
| *11 | 3.2 | 0 | 0 | 0.4 | 0.3 | Pink color | 76 | 9 | -2 |
| 12 | 3.2 | 0 | 0 | 0.6 | 0.3 | Pink color | 76 | 9 | -2 |
| 13 | 3.2 | 0 | 0 | 1.2 | 0.3 | Pink color | 77 | 9 | -2 |
| 14 | 3.2 | 0 | 0 | 1.8 | 0.3 | Pink color | 78 | 9 | -3 |
| 15 | 3.2 | 0 | 0 | 2.2 | 0 | Pink color | 79 | 9 | -3 |
| 16 | 3.2 | 0 | 0 | 2.2 | 0.1 | Pink color | 79 | 9 | -3 |
| 17 | 3.2 | 0 | 0 | 2.2 | 0.3 | Pink color | 79 | 9 | -3 |
| 18 | 3.2 | 0 | 0 | 2.2 | 0.5 | Pink color | 79 | 9 | -3 |
| 19 | 3.2 | 0 | 0 | 2.2 | 1 | Pink color | 79 | 9 | -3 |
| 20 | 3.2 | 0 | 0 | 2.2 | 1.2 | Pink color | 79 | 9 | -3 |
| 21 | 4.8 | 0 | 0 | 0.6 | 0.3 | Pink color | 76 | 12 | -3 |
| 22 | 3.2 | 0.8 | 0.8 | 2.2 | 0.3 | Pink color | 79 | 11 | -3 |
| 23 | 4.8 | 0 | 0 | 3.8 | 0.3 | Pink color | 82 | 11 | -3 |
| 24 | 4.8 | 0 | 0 | 4.2 | 0.3 | Pink color | 86 | 11 | -3 |
| *25 | 4.8 | 0 | 0 | 5.2 | 0.3 | Light pink color | 92 | 11 | -3 |
| *26 | 5.0 | 0 | 0 | 0.4 | 0.3 | Purple color | 72 | 13 | -3 |
| 27 | 5.0 | 0 | 0 | 0.6 | 0.3 | Pink color | 76 | 12 | -3 |
| 28 | 5.0 | 0 | 0 | 2.2 | 0.3 | Pink color | 79 | 12 | -3 |
| 29 | 5.0 | 0 | 0 | 3.8 | 0.3 | Pink color | 83 | 12 | -3 |
| 30 | 5.0 | 0 | 0 | 4.0 | 0.3 | Pink color | 86 | 12 | -3 |
| *31 | 5.0 | 0 | 0 | 5.2 | 0.3 | Light pink color | 91 | 12 | -3 |
| *32 | 5.6 | 0 | 0 | 0.4 | 0.3 | Purple color | 71 | 14 | -4 |
| 33 | 5.6 | 0 | 0 | 0.6 | 0.3 | Purple color | 73 | 14 | -4 |
| 34 | 5.6 | 0 | 0 | 2.2 | 0.3 | Purple color | 78 | 14 | -5 |
| 35 | 5.6 | 0 | 0 | 3.8 | 0.3 | Pink color | 81 | 14 | -5 |
| 36 | 5.6 | 0 | 0 | 4.0 | 0.3 | Pink color | 85 | 14 | -6 |

Table 1 (Continued)

| Sample No. | Healing effect (%) | Elegance (%) | Average proportion (%) | Relative density (%) | Vickers hardness (GPa) | Blur | Comprehensive evaluation |
|---|---|---|---|---|---|---|---|
| *1 | 72.5 | 72.5 | 72.5 | 96 | 11.8 | Observed | Bad |
| *2 | 75 | 72.5 | 73.75 | 96 | 11.9 | Not observed | Bad |
| *3 | 77.5 | 72.5 | 75 | 96 | 11.7 | Observed | Bad |
| *4 | 75 | 77.5 | 76.25 | 96 | 11.9 | Not observed | Bad |
| *5 | 67.5 | 77.5 | 72.5 | 96 | 11.9 | Not observed | Bad |
| 6 | 87.5 | 75 | 81.25 | 96 | 11.7 | Not observed | Good |
| 7 | 85 | 77.5 | 81.25 | 96 | 11.8 | Not observed | Good |
| 8 | 80 | 82.5 | 81.25 | 96 | 11.9 | Not observed | Good |
| 9 | 77.5 | 82.5 | 80 | 96 | 11.9 | Not observed | Good |
| *10 | 72.5 | 77.5 | 75 | 96 | 11.9 | Not observed | Bad |
| *11 | 87.5 | 75 | 81.25 | 96 | 11.6 | Observed | Bad |
| 12 | 97.5 | 77.5 | 87.5 | 96 | 11.7 | Not observed | Good |
| 13 | 97.5 | 77.5 | 87.5 | 96 | 11.7 | Not observed | Good |
| 14 | 95 | 77.5 | 86.25 | 96 | 11.7 | Not observed | Good |
| 15 | 95 | 80 | 87.5 | 95 | 11.8 | Not observed | Good |
| 16 | 100 | 80 | 90 | 96 | 11.8 | Not observed | Good |
| 17 | 100 | 80 | 90 | 96 | 11.4 | Not observed | Good |
| 18 | 97.5 | 80 | 88.75 | 97 | 11.2 | Not observed | Good |
| 19 | 95 | 80 | 87.5 | 97 | 11.0 | Not observed | Good |
| 20 | 92.5 | 77.5 | 85 | 98 | 10.8 | Not observed | Good |
| 21 | 90 | 75 | 82.5 | 96 | 11.5 | Not observed | Good |
| 22 | 90 | 80 | 85 | 96 | 11.6 | Not observed | Good |
| 23 | 92.5 | 80 | 86.25 | 96 | 11.7 | Not observed | Good |
| 24 | 77.5 | 82.5 | 80 | 96 | 11.7 | Not observed | Good |
| *25 | 72.5 | 80 | 76.25 | 96 | 11.7 | Not observed | Bad |
| *26 | 77.5 | 82.5 | 80 | 96 | 11.4 | Observed | Bad |
| 27 | 85 | 82.5 | 83.75 | 96 | 11.4 | Not observed | Good |
| 28 | 87.5 | 82.5 | 85 | 96 | 11.6 | Not observed | Good |
| 29 | 85 | 82.5 | 83.75 | 96 | 11.7 | Not observed | Good |
| 30 | 77.5 | 82.5 | 80 | 96 | 11.6 | Not observed | Good |
| *31 | 72.5 | 85 | 78.75 | 96 | 11.6 | Not observed | Bad |
| *32 | 72.5 | 87.5 | 80 | 98 | 11.4 | Observed | Bad |
| 33 | 75 | 85 | 80 | 96 | 11.4 | Not observed | Good |
| 34 | 75 | 87.5 | 81.25 | 96 | 11.5 | Not observed | Good |
| 35 | 77.5 | 87.5 | 82.5 | 96 | 11.6 | Not observed | Good |
| 36 | 77.5 | 87.5 | 82.5 | 96 | 11.6 | Not observed | Good |

*Sample marked with * is out of the scope of the present invention.

Table 2

| Sample No. | Er₂O₃ (% by mass) | Eu₂O₃ (% by mass) | Ho₂O₃ (% by mass) | Al₂O₃ (% by mass) | ZnO (% by mass) | Color tone | Lightness index L* | Chromaticness indices | |
|---|---|---|---|---|---|---|---|---|---|
| | | | | | | | | a* | b* |
| *37 | 10.0 | 0 | 0 | 0.4 | 0.3 | Purple color | 72 | 16 | -4 |
| 38 | 10.0 | 0 | 0 | 3.8 | 0.3 | Purple color | 83 | 16 | -5 |
| 39 | 10.0 | 0 | 0 | 5.0 | 0.3 | Purple color | 90 | 16 | -5 |
| *40 | 10.0 | 0 | 0 | 5.2 | 0.3 | Light Purple color | 92 | 16 | -5 |
| *41 | 15.0 | 0 | 0 | 0.4 | 0.3 | Purple color | 71 | 20 | -6 |
| 42 | 15.0 | 0 | 0 | 3.8 | 0.3 | Purple color | 82 | 20 | -6 |
| 43 | 15.0 | 0 | 0 | 5.0 | 0.3 | Purple color | 89 | 20 | -6 |
| *44 | 15.0 | 0 | 0 | 5.2 | 0.3 | Light Purple color | 91 | 20 | -6 |
| *45 | 15.2 | 0 | 0 | 0.5 | 0.3 | Purple color | 78 | 21 | -7 |
| *46 | 15.2 | 0 | 0 | 4.0 | 0.3 | Purple color | 85 | 21 | -8 |
| *47 | 15.2 | 0 | 0 | 5.2 | 0.3 | Light Purple color | 87 | 21 | -8 |
| *48 | 0 | 2.2 | 0 | 2.2 | 0.3 | Light Pink color | 80 | 6 | -1 |
| 49 | 0 | 3.0 | 0 | 2.2 | 0.3 | Pink color | 79 | 8 | -1 |
| 50 | 0 | 3.2 | 0 | 2.2 | 0.3 | Pink color | 79 | 9 | -1 |
| 51 | 0 | 4.8 | 0 | 2.2 | 0.3 | Pink color | 77 | 12 | -1 |
| 52 | 0 | 5.0 | 0 | 2.2 | 0.3 | Pink color | 76 | 12 | -1 |
| 53 | 0 | 5.6 | 0 | 2.2 | 0.3 | Purple color | 70 | 14 | -1 |
| 54 | 0 | 10.0 | 0 | 2.2 | 0.3 | Purple color | 68 | 17 | -1 |
| 55 | 0 | 15.0 | 0 | 2.2 | 0.3 | Purple color | 65 | 19 | -1 |
| *56 | 0 | 15.2 | 0 | 2.2 | 0.3 | Purple color | 63 | 21 | -1 |
| *57 | 0 | 0 | 2.2 | 2.2 | 0.3 | Light Pink color | 77 | 6 | 2 |
| 58 | 0 | 0 | 3.0 | 2.2 | 0.3 | Pink color | 76 | 8 | 2 |
| 59 | 0 | 0 | 3.2 | 2.2 | 0.3 | Pink color | 76 | 9 | 2 |
| 60 | 0 | 0 | 4.8 | 2.2 | 0.3 | Pink color | 74 | 12 | 2 |
| 61 | 0 | 0 | 5.0 | 2.2 | 0.3 | Pink color | 72 | 13 | 2 |
| 62 | 0 | 0 | 5.6 | 2.2 | 0.3 | Purple color | 69 | 14 | 2 |
| 63 | 0 | 0 | 10.0 | 2.2 | 0.3 | Purple color | 67 | 17 | 2 |
| 64 | 0 | 0 | 15.0 | 2.2 | 0.3 | Purple color | 65 | 20 | 2 |
| *65 | 0 | 0 | 15.2 | 2.2 | 0.3 | Purple color | 64 | 22 | 2 |

Table 2 (Continued)

| Sample No. | Healing effect (%) | Elegance (%) | Average proportion (%) | Relative density (%) | Vickers hardness (GPa) | Blur | Comprehensive evaluation |
|---|---|---|---|---|---|---|---|
| *37 | 77.5 | 90 | 83.75 | 96 | 11.4 | Observed | Bad |
| 38 | 80 | 95 | 87.5 | 96 | 11.6 | Not observed | Good |
| 39 | 80 | 97.5 | 88.75 | 96 | 11.7 | Not observed | Good |
| *40 | 72.5 | 82.5 | 77.5 | 95 | 11.7 | Not observed | Bad |
| *41 | 77.5 | 82.5 | 80 | 96 | 11.4 | Observed | Bad |
| 42 | 77.5 | 90 | 83.75 | 96 | 11.6 | Not observed | Good |
| 43 | 75 | 95 | 85 | 96 | 11.7 | Not observed | Good |
| *44 | 72.5 | 82.5 | 77.5 | 96 | 11.7 | Not observed | Bad |
| *45 | 77.5 | 80 | 78.75 | 96 | 11.4 | Observed | Bad |
| *46 | 75 | 82.5 | 78.75 | 96 | 11.6 | Not observed | Bad |
| *47 | 67.5 | 85 | 76.25 | 95 | 11.7 | Not observed | Bad |
| *48 | 72.5 | 72.5 | 72.5 | 96 | 11.9 | Not observed | Bad |
| 49 | 87.5 | 75 | 81.25 | 96 | 11.8 | Not observed | Good |
| 50 | 95 | 77.5 | 86.25 | 96 | 11.8 | Not observed | Good |
| 51 | 90 | 80 | 85 | 96 | 11.6 | Not observed | Good |
| 52 | 85 | 85 | 85 | 96 | 11.6 | Not observed | Good |
| 53 | 77.5 | 85 | 81.25 | 96 | 11.5 | Not observed | Good |
| 54 | 75 | 90 | 82.5 | 96 | 11.5 | Not observed | Good |
| 55 | 72.5 | 95 | 83.75 | 96 | 11.4 | Not observed | Good |
| *56 | 70 | 85 | 77.5 | 95 | 11.3 | Not observed | Bad |
| *57 | 72.5 | 72.5 | 72.5 | 96 | 11.9 | Not observed | Bad |
| 58 | 87.5 | 75 | 81.25 | 96 | 11.8 | Not observed | Good |
| 59 | 95 | 77.5 | 86.25 | 96 | 11.8 | Not observed | Good |
| 60 | 90 | 80 | 85 | 96 | 11.6 | Not observed | Good |
| 61 | 82.5 | 85 | 83.75 | 96 | 11.6 | Not observed | Good |
| 62 | 75 | 85 | 80 | 96 | 11.5 | Not observed | Good |
| 63 | 75 | 90 | 82.5 | 96 | 11.5 | Not observed | Good |
| 64 | 72.5 | 95 | 83.75 | 96 | 11.4 | Not observed | Good |
| *65 | 70 | 85 | 77.5 | 95 | 11.3 | Not observed | Bad |

\*Sample marked with \* is out of the scope of the present invention.

As is apparent from the results shown in Table 1 and Table 2, samples Nos. 1 to 5, 45 to 47, 48, 56, 57 and 65 in which the content of the coloring agent comprising at least one kind selected from erbium oxide, europium oxide and holmium oxide is less than 3% by mass or more than 15% by mass got poor evaluations of either or both of the healing effect and elegance by monitors, and got poor comprehensive evaluation.

Samples Nos. 1, 3, 11, 26, 32, 37, 41 and 45 in which the content of the aluminum oxide is less than 0.6% by mass were subjected to marking by a laser processing method. As a result, blur was observed at the periphery of the portion irradiated with laser beam, and it was found that these samples are unsuited for use in decorative components that require marking and boring by irradiation with laser beam.

Samples Nos. 5, 10, 25, 31, 40, 44 and 47 in which the content of the aluminum oxide is more than 5.0% by mass showed increased values of the lightness index, and got particularly poor evaluation of the healing effect by monitors and got poor comprehensive evaluation.

In contrast, it was found that samples Nos. 6 to 9, 12 to 24, 27 to 30, 33 to 36, 38, 39, 42, 43, 49 to 55 and 58 to 64 as Examples of the present invention develop pinkish to purplish color tone that makes users to feel gentleness and mild warmness, thus making it possible to exert a higher healing effect on users and to make them to feel elegances, since the content of the coloring agent is not less than 3.0% by mass nor more than 15.0% by mass and the content of the aluminum oxide is not less than 0.6% by mass nor more than 5.0% by mass. In particular, it was found that samples Nos. 12 to 23 got evaluation of the healing effect by monitors of not less than 90%, and can exert a higher healing effect. Also, samples Nos. 38, 39, 42, 43, 54, 55, 63 and 64 got evaluation of elegance by monitors of not less than 90%.

It was also found that, when samples Nos. 15 to 20 in which the contents of the coloring agent and aluminum oxide are the same are compared, samples Nos. 16 to 19 in which the content of the zinc oxide is not less than 0.1% by mass nor more than 1% by mass showed the relative density of not less than 96% and Vickers hardness (Hv) of not less than 11 GPa, and are also dense and have hardness required to decorative components.

Using the pinkish to purplish ceramics of the present invention, a decorative component for fishing line guide, such as a fishing line guide ring; a decorative component for watch, such as a watch case; a decorative component for mobile terminal, such as various operation keys of a mobile phone; a decorative component for daily life articles, such as a soap case; a decorative component for vehicle parts, such as emblem; a decorative component for sports goods, such as accessories of a golf club; a decorative component for musical instrument, such as a base plate of a guitar; a decorative component for accessory, such as a case of an earphone unit; and a decorative component for architectural materials, such as a door handle were produced. As a result, it was found that all decorative components develop pinkish to purplish color tone that makes users to feel gentleness and mild warmness, thus making it possible to exert a higher healing effect on users and to make them to feel elegance, and that an attractive product can be formed by using the pinkish to purplish ceramics of the present invention as the respective decorative components, since blur is less likely to occur at the periphery of the portion irradiated with laser beam even when subjected to marking and boring by irradiation with laser beam.

Example 2

Next, samples were produced by varying a ratio of the content of the aluminum oxide to the content of the coloring agent, and confirmation of color tone and a questionnaire survey with respect to high-grade impression and aesthetic satisfaction were carrid out.

First, weighing was conducted in order that the contents of erbium oxide ($Er_2O_3$) and aluminum oxide ($Al_2O_3$) as the coloring agent become the contents shown in Table 3 based on 100 parts by mass of a mixed powder comprising 97 mol% of a powder of zirconium oxide ($ZrO_2$) and 3 mol% of a powder of yttrium oxide ($Y_2O_3$) as a stabilizing agent, and also the content of zinc oxide (ZnO) becomes 0.3% by mass that is constant in each sample. The subsequent steps were conducted by the same production method as in Example 1 to obtain numeral keys 72a of a mobile phone 60 shown in Fig. 5 of samples Nos. 66 to 77.

After visually confirming the color tone, the values of the lightness index L* and the chromaticness indices a* and b* in the L*a*b* color space of CIE1976 of inner links 20 of band links were measured in accordance with JIS Z 8722-2000, using a colorimeter (CR-221, manufactured by the former Minolta Co., Ltd.) in combination with a CIE standard light source D65 as a light source in a light receiving method set under the conditions a ((45-n) [45-0]) with the measurement diameter being set to 3 mm.

The color tone was evaluated by 40 monitors comprising 5 male and 5 female monitors in Europe in each of 4 age brackets from 20s to 50s, by responding to questionnaire asking how they felt about quality; high-grade impression and aesthetic satisfaction. Percentage of the monitors responded positively for high-grade impression and aesthetic satisfaction was calculated and an average of 2 items was determined. Evaluation by monitors was conducted in a state where a plurality of samples are arranged so that numeral keys 72a are disposed on the mobile phone 60.

The respective contents of erbium oxide, europium oxide, aluminum oxide and zinc oxide were obtained by semi-quantitative analysis of elements using an X-ray fluorescence analyzer by a FP method, and converting the content to that of oxide. The results are shown in Table 3.

Table 3

| Sample No. | Coloring agent (a) (% by mass) | $Al_2O_3$ (b) (% by mass) | Ratio (b/a) | Color tone | Lightness index L* | Chromaticness indices | | High-grade impression and aesthetic satisfaction (%) |
|---|---|---|---|---|---|---|---|---|
| | | | | | | a* | b* | |
| 66 | 3.0 | 0.6 | 0.20 | Pink color | 79 | 8 | -2 | 87.5 |
| 67 | 3.0 | 1.0 | 0.33 | Pink color | 81 | 8 | -2 | 92.5 |
| 68 | 3.0 | 3.0 | 1.00 | Pink color | 84 | 8 | -3 | 87.5 |
| 69 | 3.0 | 5.0 | 1.67 | Pink color | 89 | 8 | -3 | 80 |

(continued)

| Sample No. | Coloring agent (a) (% by mass) | Al$_2$O$_3$ (b) (% by mass) | Ratio (b/a) | Color tone | Lightness index L* | Chromaticness indices | | High-grade impression and aesthetic satisfaction (%) |
|---|---|---|---|---|---|---|---|---|
| | | | | | | a* | b* | |
| 70 | 10.0 | 0.6 | 0.06 | Purple color | 73 | 16 | -3 | 82.5 |
| 71 | 10.0 | 1.0 | 0.10 | Purple color | 76 | 16 | -3 | 87.5 |
| 72 | 10.0 | 3.0 | 0.30 | Purple color | 81 | 16 | -4 | 97.5 |
| 73 | 10.0 | 5.0 | 0.50 | Purple color | 90 | 16 | -5 | 95 |
| 74 | 15.0 | 0.6 | 0.04 | Purple color | 72 | 20 | -3 | 82.5 |
| 75 | 15.0 | 1.0 | 0.07 | Purple color | 77 | 20 | -3 | 85 |
| 76 | 15.0 | 3.0 | 0.20 | Purple color | 81 | 20 | -4 | 90 |
| 77 | 15.0 | 5.0 | 0.33 | Purple color | 89 | 20 | -6 | 92.5 |

As is apparent from the results shown in Table 3, sample Nos. 70, 74 and 75 in which a ratio of aluminum oxide to erbium oxide as the coloring agent is less than 0.1 and sample No. 69 in which the ratio is more than 1.0 got poor evaluation of high-grade impression and aesthetic satisfaction by monitors.

It was found that, when compared with the above samples, samples Nos. 66 to 68, 71 to 73, 76 and 77 in which a ratio of aluminum oxide to erbium oxide as the coloring agent is in the range of not less than 0.1 nor more than 1.0 showed the evaluation by monitors of not less than 87.5%, and can give high-grade impression and aesthetic satisfaction.

Example 3

Next, pinkish to purplish ceramics containing, as the main component, zirconium oxide stabilized by a stabilizing agent consisting of yttrium, cerium or dysprosium compound were respectively produced, and heat resistance was confirmed by determining the strength and a ratio of a crystal phase.

First, a powder of zirconium oxide (ZrO$_2$), and powders of stabilizing agents such as yttrium oxide (Y$_2$O$_3$) as the yttrium compound, cerium oxide (CeO$_2$) as the cerium compound and dysprosium oxide (Dy$_2$O$_3$) as the dysprosium compound were respectively prepared and then mixed in each molar ratio (mol%) in Table 4 to obtain a mixed powder. In the same manner as in sample No. 38 of Example 1, weighing was conducted in order that the content of erbium oxide (Er$_2$O$_3$) becomes 10% by mass, the content of aluminum oxide (Al$_2$O$_3$) becomes 3.8% by mass and the content of zinc oxide (ZnO) becomes 0.3% by mass based on 100 parts by mass of a mixed powder, and then these materials were charged in a vibrating mill, together with water as a solvent, followed by mixing and grinding.

Next, the subsequent steps were conducted by the same production method as in Example 1 to finally obtain samples Nos. 78 to 86 as specimens measuring 45 mm in length, 4 mm in width and 3 mm in thickness described in JIS R 1601-1995. Then, the three-point bending strength was measured in accordance with JIS R 1601-1995 with respect to each sample.

Using a heating apparatus such as a heater, the respective samples were dried at a temperature of 150°C for 100 hours, and then a ratio of a tetragonal crystal and a cubic crystal to a monoclinic crystal of a surface of samples was measured as follows. After the measurement of each sample by X-ray diffraction, (111) and (11-1) reflection peak intensities of the monoclinic crystal and (111) reflection peak intensities of the tetragonal and cubic crystals were used to calculate the ratio Xm of the monoclinic crystal by the following equation. In the following equation, (111) of a monoclinic crystal is denoted as Im(111), (11-1) of a monoclinic crystal is denoted as Im(11-1), and (111) of a tetragonal crystal and a cubic crystal are denoted as Itc(111).

$$Xm\ (\%) = (Im(111) + (Im(11\text{-}1))/(Im(111) + (Im(11\text{-}1) +$$

$$Itc(111)) \times 100$$

The proportion of the monoclinic crystal was determined from the calculated value of Xm, and proportions of the cubic crystal and the tetragonal crystal were determined by subtracting Xm from 100. The results are shown in Table 4.

Table 4

| Sample No. | Zirconium oxide (mol%) | Yttrium compound (mol%) | Cerium compound (mol%) | Dysprosium compound (mol%) | Color tone | Strength (MPa) | Crystal phase after heating | |
|---|---|---|---|---|---|---|---|---|
| | | | | | | | Proportions Proportion of tetragonal crystal and cubic crystal (%) | Proportion of monoclinic crystal (%) |
| 78 | 99 | 1 | - | - | Purple | 930 | 82 | 18 |
| 79 | 98 | 2 | - | - | Purple | 950 | 90 | 10 |
| 80 | 97 | 3 | - | - | Purple | 980 | 92 | 8 |
| 81 | 92 | - | 8 | - | Purple | 620 | 98 | 2 |
| 82 | 90 | - | 10 | - | Purple | 650 | 100 | 0 |
| 83 | 88 | - | 12 | - | Purple | 700 | 100 | 0 |
| 84 | 97 | - | - | 3 | Purple | 510 | 97 | 3 |
| 85 | 94 | - | - | 6 | Purple | 580 | 100 | 0 |
| 86 | 92 | - | - | 8 | Purple | 610 | 100 | 0 |

As is apparent from the results shown in Table 4, samples Nos. 78 to 80, each containing zirconia as the main component in which an yttrium compound is used as a stabilizing agent, showed a three-point bending strength of a high value of not less than 900 MPa and can improve mechanical properties.

It also became apparent that samples Nos. 81 to 86, each containing a cerium compound or a dysprosium compound as a stabilizing agent, make it difficult to cause cracking or breakage on the surface due to expansion in volume associated with phase transition, and is excellent in heat resistance because of small proportion of the monoclinic crystal after heating and suppression of phase transition of a zirconia crystal

Description of Reference Numerals

10A, 10B:    Watch case

20:          Inner links

30:          Outer links

40:          Pin

50:          Watch band

60:          Mobile phone

80:     Note-type personal computer (Note PC)

94:     Fishing line guide

100:    Soap case

110:    Coffee cup set

121:    Emblem

132:    Corner pole

140:    Golf club

150:    spike shoes

160:    Guitar

170:    Earphone unit

180:    Eyeglasses

190:    Door handle

**Claims**

1.  Pinkish to purplish ceramics, comprising:

    zirconium oxide containing stabilizing agent as a main component;
    a coloring agent composed of at least one kind selected from erbium oxide, europium oxide and holmium oxide; and
    aluminum oxide,
    wherein a content of the coloring agent is not less than 3.0% by mass nor more than 15.0% by mass, and
    a content of the aluminum oxide is not less than 0.6% by mass nor more than 5.0% by mass, based on 100% by mass of all components constituting the pinkish to purplish ceramics.

2.  The pinkish to purplish ceramics according to Claim 1, wherein a ratio of the content of the aluminum oxide to the content of the coloring agent is not less than 0.1 nor more than 1.0.

3.  The pinkish to purplish ceramics according to Claim 1 or 2, further comprising zinc oxide,
    wherein a content of the zinc oxide is not less than 0.1% by mass nor more than 1.0% by mass, based on 100% by mass of all components constituting the pinkish to purplish ceramics.

4.  The pinkish to purplish ceramics according to any one of Claims 1 to 3,
    wherein a lightness index L* is in a range of not less than 72 nor more than 85 in the L*a*b* color space of CIE1976 of a decorative surface,
    a chromaticness indice a* is in a range of not less than 7 nor more than 20 in the L*a*b* color space of CIE1976 of the decorative surface, and
    a chromaticness indice b* is in a range of not less than -6 nor more than 2 in the L*a*b* color space of CIE1976 of the decorative surface.

5.  The pinkish to purplish ceramics according to any one of Claims 1 to 4,
    wherein the stabilizing agent is a compound comprising at least one selected from the group consisting of yttrium, cerium and dysprosium.

6.  A decorative component for watch, comprising the pinkish to purplish ceramics according to any one of Claims 1 to 5.

**7.** A decorative component for mobile terminal, comprising the pinkish to purplish ceramics according to any one of Claims 1 to 5.

**8.** A decorative component for fishing line guide, comprising the pinkish to purplish ceramics according to any one of Claims 1 to 5.

**9.** A decorative component for daily life articles, comprising the pinkish to purplish ceramics according to any one of Claims 1 to 5.

**10.** A decorative component for vehicle parts, comprising the pinkish to purplish ceramics according to any one of Claims 1 to 5.

**11.** A decorative component for sports goods, comprising the pinkish to purplish ceramics according to any one of Claims 1 to 5.

**12.** A decorative component for musical instrument, comprising the pinkish to purplish ceramics according to any one of Claims 1 to 5.

**13.** A decorative component for accessory, comprising the pinkish to purplish ceramics according to any one of Claims 1 to 5.

**14.** A decorative component for building materials, comprising the pinkish to purplish ceramics according to any one of Claims 1 to 5.

**Patentansprüche**

**1.** Blassrosa bis blassviolette Keramik umfassend:

Zirkoniumoxid enthaltendes stabilisierendes Mittel als Hauptkomponente;
ein farbgebendes Mittel, das aus wenigstens einem ausgewählt aus Erbiumoxid, Europiumoxid und Holmiumoxid zusammengesetzt ist; und
Aluminiumoxid,
worin der Gehalt des farbgebenden Mittels nicht weniger als 3,0 Massen-%, noch mehr als 15,0 Massen-% beträgt und
der Gehalt an Aluminiumoxid nicht weniger als 0,6 Massen-%, noch mehr als 5,0 Massen-% bezogen auf 100 Massen-% aller Komponenten, die in der blassrosa bis blassvioletten Keramik enthalten sind, beträgt.

**2.** Blassrosa bis blassviolette Keramik gemäß Anspruch 1, worin das Verhältnis des Gehalts an Aluminiumoxids zum Gehalt des farbgebenden Mittels nicht weniger als 0,1, noch mehr als 1,0 beträgt.

**3.** Blassrosa bist blassviolette Keramik gemäß Anspruch 1 oder 2 ferner umfassend Zinkoxid,
worin der Gehalt an Zinkoxid nicht weniger als 0,1 Massen-%, noch mehr als 1,0 Massen-% bezogen auf 100 Massen-% aller Komponenten, die in der blassrosa bis blassviolettfarbenen Keramik enthalten sind, beträgt.

**4.** Blassrosa bis blassviolette Keramik gemäß einem der Ansprüche 1 bis 3, worin der Hellikgeitsindex $L^*$ einer dekorativen Oberfläche in einem Bereich von nicht weniger als 72, noch mehr als 85 im $L^*a^*b^*$-Farbraum gemäß CIE 1976 ist,
der Farbintensitätsindex $a^*$ der dekorativen Oberfläche in einem Bereich von nicht weniger als 7, noch mehr als 20 im $L^*a^*b^*$-Farbraum gemäß CIE 1976 ist, und
der Farbintensitätsindex $b^*$ der dekorativen Oberfläche in einem Bereich von nicht weniger als -6, noch mehr als 2 im $L^*a^*b^*$-Farbraum gemäß CIE 1976 ist.

**5.** Blassrosa bis blasviolette Keramik gemäß einem der Ansprüche 1 bis 4,
worin das stabilisierende Mittel eine Verbindung umfassend wenigstens eines ausgewählt aus der Gruppe bestehend aus Yttrium, Cer und Dysprosium ist.

**6.** Dekorative Komponente für eine Armbanduhr umfassend die blassrosa bis blassviolette Keramik gemäß einem der Ansprüche 1 bis 5.

7. Dekorative Komponente für ein mobiles Endgerät umfassend die blassrosa bis blassviolette Keramik gemäß einem der Ansprüche 1 bis 5.

8. Dekorative Komponente für eine Angelschnurführung umfassend die blassrosa bis blassviolette Keramik gemäß einem der Ansprüche 1 bis 5.

9. Dekorative Komponente für Alltagsgegenstände umfassend die blassrosa bis blassviolette Keramik gemäß einem der Ansprüche 1 bis 5.

10. Dekorative Komponente für Autoteile umfassend die blassrosa bis blassviolette Keramik gemäß einem der Ansprüche 1 bis 5.

11. Dekorative Komponente für Sportartikel umfassend die blassrosa bis blassviolette Keramik gemäß einem der Ansprüche 1 bis 5.

12. Dekorative Komponente für ein Musikinstrument umfassend die blassrosa bis blassviolette Keramik gemäß einem der Ansprüche 1 bis 5.

13. Dekorative Komponente für ein Accessoire umfassend die blassrosa bis blassviolette Keramik gemäß einem der Ansprüche 1 bis 5.

14. Dekorative Komponente für Baumaterialien umfassend die blassrosa bis blassviolette Keramik gemäß einem der Ansprüche 1 bis 5.


**Revendications**

1. Céramique rosée à violacée, comprenant :

   de l'oxyde de zirconium contenant un agent stabilisant en tant que composant principal ;
   un agent colorant composé d'au moins un type choisi parmi l'oxyde d'erbium, l'oxyde d'europium et l'oxyde d'holmium ; et
   de l'oxyde d'aluminium,
   dans laquelle une teneur de l'agent colorant n'est ni inférieure à 3,0 % en masse ni supérieure à 15,0 % en masse, et
   une teneur d'oxyde d'aluminium n'est ni inférieure à 0,6 % en masse ni supérieure à 5,0 % en masse, sur la base de 100 % en masse de tous les composants constituant la céramique rosée à violacée.

2. Céramique rosée à violacée selon la revendication 1, dans laquelle un rapport de la teneur d'oxyde d'aluminium sur la teneur de l'agent colorant n'est ni inférieure à 0,1 ni supérieure à 1,0.

3. Céramique rosée à violacée selon la revendication 1 ou 2, comprenant en outre de l'oxyde de zinc,
   dans laquelle une teneur d'oxyde de zinc n'est ni inférieure à 0,1 % en masse ni supérieure à 1,0 % en masse, sur la base de 100 % en masse de tous les composants constituant la céramique rosée à violacée.

4. Céramique rosée à violacée selon l'une quelconque des revendications 1 à 3,
   dans laquelle l'indice de clarté L* se situe dans une plage ni inférieure à 72 ni supérieure à 85 dans l'espace de couleurs L*a*b* de CIE1976 d'une surface décorative,
   l'indice de chromie a* se situe dans une plage ni inférieure à 7 ni supérieure à 20 dans l'espace de couleurs L*a*b* de CIE1976 de la surface décorative, et
   l'indice de chromie b* se situe dans une plage ni inférieure à -6 ni supérieure à 2 dans l'espace de couleurs L*a*b* de CIE1976 de la surface décorative.

5. Céramique rosée à violacée selon l'une quelconque des revendications 1 à 4, dans laquelle l'agent stabilisant est un composé comprenant au moins un élément choisi parmi le groupe comprenant l'yttrium, le cérium et le dysprosium.

6. Composant décoratif pour montre, comprenant la céramique rosée à violacée selon l'une quelconque des revendications 1 à 5.

7. Composant décoratif pour terminal mobile, comprenant la céramique rosée à violacée selon l'une quelconque des revendications 1 à 5.

8. Composant décoratif pour guide de canne à pêche, comprenant la céramique rosée à violacée selon l'une quelconque des revendications 1 à 5.

9. Composant décoratif pour articles de la vie quotidienne, comprenant la céramique rosée à violacée selon l'une quelconque des revendications 1 à 5.

10. Composant décoratif pour pièces de véhicule, comprenant la céramique rosée à violacée selon l'une quelconque des revendications 1 à 5.

11. Composant décoratif pour articles de sport, comprenant la céramique rosée à violacée selon l'une quelconque des revendications 1 à 5.

12. Composant décoratif pour instrument de musique, comprenant la céramique rosée à violacée selon l'une quelconque des revendications 1 à 5.

13. Composant décoratif pour accessoire, comprenant la céramique rosée à violacée selon l'une quelconque des revendications 1 à 5.

14. Composant décoratif pour matériaux de construction, comprenant la céramique rosée à violacée selon l'une quelconque des revendications 1 à 5.

Fig. 1(a)

Fig. 1(b)

*Fig. 2*

*Fig. 3*

*Fig. 4*

*Fig. 5*

Fig. 6

*Fig. 7(a)*

95

*Fig. 7(b)*

94

95

96

97

99

98

Fig. 8

Fig. 9

110

111

113

112

Fig. 10

120

121

Fig. 11

132

135

134

133

Fig. 12

*Fig. 13*

*Fig. 14*

Fig. 15

*Fig. 16*

180

184 a

183 a

182

184 b

183 b

181 a

185

181 b

*Fig. 17*

**REFERENCES CITED IN THE DESCRIPTION**

**Patent documents cited in the description**

- JP 4002658 A

- JP 1234364 A

**Non-patent literature cited in the description**

- *Marubeni America Corporation Sunnyvale office homepage,* 20 February 2008, <http://www.marubeni-sunnyvale.com/high-strengthened-glass.html>